(19) Europäisches Patentamt
European Patent Office
Office européen des brevets

(11) EP 1 445 731 A2

(12) EUROPEAN PATENT APPLICATION

(43) Date of publication:
**11.08.2004 Bulletin 2004/33**

(51) Int Cl.[7]: **G06T 5/00**

(21) Application number: **04001910.1**

(22) Date of filing: **29.01.2004**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **05.02.2003 JP 2003028049**
**06.02.2003 JP 2003029471**

(71) Applicant: **KONICA MINOLTA HOLDINGS, INC.**
**Tokyo 100-0005 (JP)**

(72) Inventors:
- **Nomura, Shoichi**
**Konica Minolta Photo Imaging, Inc.**
**Hachioji-shi Tokyo, 192-8505 (JP)**
- **Ito, Tsukasa, Konica Minolta Photo Imaging, Inc.**
**Hino-shi Tokyo, 191-8511 (JP)**
- **Hattori, Tsuyoshi**
**Konica Minolta Photo Imaging Inc**
**Hachioji-shi Tokyo, 192-8505 (JP)**
- **Nakajima, Takeshi**
**Konica Minolta Photo Imaging Inc**
**Hino-shi Tokyo, 191-8511 (JP)**
- **Ikeda, Chizuko**
**Konica Minolta Photo Imaging, Inc.**
**Hino-shi Tokyo, 191-8511 (JP)**

(74) Representative:
**Gille Hrabal Struck Neidlein Prop Roos**
**Patentanwälte**
**Brucknerstrasse 20**
**40593 Düsseldorf (DE)**

# (54) Image processing method, image processing apparatus and image processing program

(57) There is described an image-processing method for extracting a main photographed subject from an image, which might be set in various ways in the image corresponding to various kinds of photographic conditions, and further, for making it possible to provide advanced image processing services in a simple manner by employing the results of the extracting operations. The image-processing method includes the steps of: acquiring input image information from an image by means of one of various kinds of image inputting devices; setting a subject pattern including one or more constituent elements from the input image information; applying a multi-resolution conversion processing to the input image information; detecting the constituent elements by employing a decomposed image of a suitable resolution level determined with respect to each of the constituent elements; and extracting the subject pattern from the input image information, based on the constituent elements detected in the detecting step.

FIG. 1

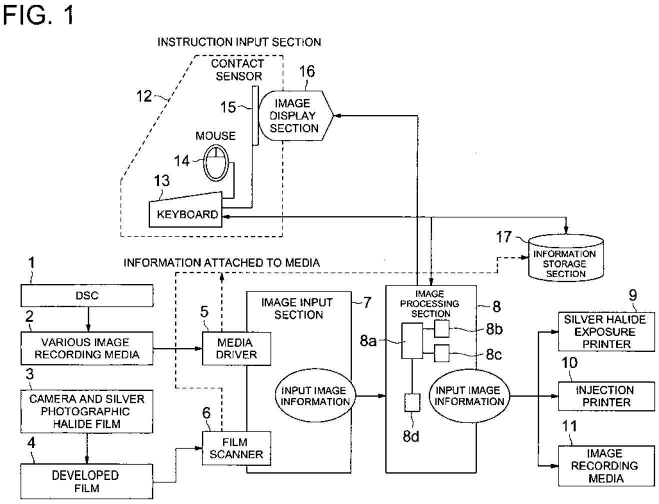


EP 1 445 731 A2

## Description

### BACKGROUND OF THE INVENTION

The present invention relates to an image processing method and image processing apparatus for getting output image information by image processing, based on the input image information obtained from image input means, and an image processing program for control of such operations.
A picture is taken by a conventional camera using a silver halide photographic film or by a digital still camera having come into widespread use in recent years. Then the obtained image is copied on a hard copy or displayed on a display unit such as a CRT to provide image representation. This type of a system has been used so far.
In such an image reproduction system, the image taken is represented in an agreeable manner, so it is a common practice to process the original image by adjusting brightness, contrast and others, and to represent the image as an output-referred image.
For example, in the case of a prior art silver halide photographic negative/positive system, exposure time and the intensity of light from a light source have been changed when an image is printed from a film onto development paper and exposure is performed.
When printing from a digital still camera, a similar processing is carried out by numerical conversion of the obtained image signal value according to a Lookup Table (LUT).
When the aforementioned adjustments are made, it is essential to make preferable adjustment in conformity to the photographed image and, in many cases, to carry out adjustment most preferable to the main photographed subject in the image. To perform this adjustment by manpower requires a high level of skill and rich experience as well as a great number of man hours, and is accompanied by difficulties. There has been a long-felt need for an image processing method that provides preferred adjustment by simple means in an automatic or semi-automatic mode. To meet this need, various proposals have been made on the method of extracting the pattern represented by a human face out of an image, thereby determining the gradation based on the extracted information.
Patent Document 1, for example, proposes a method of getting a satisfactory picture by extracting information on face out of the image information and finishing it to provide a preferred gradation.
However, in the photograph normally taken, even when the main photographed subject is restricted to a human face or the like, the amount and property of information preserved in the image are different, depending on the size of the photographed image. It has been difficult to get the sufficient extraction performance. Further, as will be clear from the fact that other persons around a particular person is generally identified as different persons less important to him or her, there is a need of determining only the particular person as the main photographed subject. Needless to say, this has made it difficult to perform automatic processing. Moreover, in general cases, the main photographed subject is not limited to the face alone, and a wide variety of individuals can be assumed. They include a specific form that is not generally recognized although it is important to the photograph itself. It has been very difficult to provide sufficient image processing of such a great variety of image information.
In recent years, there have been services of modifying the human expression of a picture to comply with the user's preference. These services process an unwanted picture of a person with his eyes shut, for example, and provide a print satisfactory to the user. (Patent Document 2)
There are services provided to modify what is normally called "red eyes" - unpleasant phenomenon on the photograph where pupils appear shining in a red or gold color due to photographing by a stroboscopic lamp in a dark place. To solve these problems, the area in question must be limited and correctly extracted. Similarly to the aforementioned case, there is no way of performing this automatically by simple means. Even if there is some way, subject is predicted from the color tone and external form in many cases. This may lead to a decision error due to the similarity of patterns. Such a method cannot be said to be a satisfactory one.
Patent Document 3 describes the method for dodging by splitting an image on the brightness level and creating a mask by means of a histogram obtained from the original image.
This method is described as providing image reproduction with the contrast kept as required, while the gradation of height light and shadow is maintained.
However, when the aforementioned partial gradation compensation has been applied to a marked degree, an artificial contour line has occurred close to the image edge located in the vicinity of the mask in some cases. A sufficient correction could not be gained at all times.

[Patent Document 1]

Tokkai 2001-84274

[Patent Document 2]

Tokkai 2002-199202

[Patent Document 3]

Tokkaihei 11-284860

**SUMMARY OF THE INVENTION**

To overcome the abovementioned drawbacks in conventional image-processing methods and apparatus, it is an object of the present invention to provide an image processing technology that ensures a high performance in extracting from an image the main photographed subject that can be set in various ways, depending on particular conditions, and provides advanced image processing services in a simple manner using the result of extraction.

Still, another object of the present invention is to provide an image processing technology that reproduces a main photographed subject with appropriate image characteristics, and minimizes an artificial portion that is likely to occur on the boundary between the subjects, thereby forming a well-balanced image.

Accordingly, to overcome the cited shortcomings, the abovementioned object of the present invention can be attained by image-processing methods, apparatus and computer programs described as follow.

(1) An image-processing method, comprising the steps of: acquiring input image information from an image by means of one of various kinds of image inputting devices; setting a subject pattern including one or more constituent elements from the input image information; applying a multi-resolution conversion processing to the input image information; detecting the constituent elements by employing a decomposed image of a suitable resolution level determined with respect to each of the constituent elements; and extracting the subject pattern from the input image information, based on the constituent elements detected in the detecting step.

(2) The image-processing method of item 1, wherein the suitable resolution level is individually determined corresponding to the subject pattern.

(3) The image-processing method of item 1, wherein the suitable resolution level is individually determined corresponding to size information of the subject pattern residing in the input image information.

(4) The image-processing method of item 1, wherein the multi-resolution conversion processing is a Dyadic Wavelet transform.

(5) The image-processing method of item 1, wherein the input image information represents a color image, and the constituent elements of the subject pattern are extracted from the input image information by employing a signal value corresponding to a specific color coordinate within a color space, which is determined corresponding to the constituent elements.

(6) An image-processing method, comprising the steps of: acquiring input image information from an image by means of one of various kinds of image inputting devices; setting a subject pattern including one or more constituent elements from the input image information; acquiring size information of the subject pattern residing in the input image information; converting a resolution of the input image information, based on the size information, so as to acquire resolution-converted image information of the image; applying a multi-resolution conversion processing to the resolution-converted image information; detecting the constituent elements by employing a decomposed image of a suitable resolution level determined with respect to each of the constituent elements; and extracting the subject pattern from the resolution-converted image information, based on the constituent elements detected in the detecting step.

(7) The image-processing method of item 6, wherein the suitable resolution level and a resolution of the resolution-converted image information are individually determined corresponding to the subject pattern.

(8) The image-processing method of item 6, wherein the multi-resolution conversion processing is a Dyadic Wavelet transform.

(9) The image-processing method of item 6, wherein the input image information represents a color image, and the constituent elements of the subject pattern are extracted from the resolution-converted image information by employing a signal value corresponding to a specific color coordinate within a color space, which is determined corresponding to the constituent elements.

(10) An image-processing apparatus, comprising: an image information acquiring section to acquire input image information from an image by means of one of various kinds of image inputting devices; a setting section to set a subject pattern including one or more constituent elements from the input image information acquired by the image information acquiring section; a multi-resolution conversion processing section to apply a multi-resolution conversion processing to the input image information; a detecting section to detect the constituent elements by employing a decomposed image of a suitable resolution level determined with respect to each of the constituent elements; and an extracting section to extract the subject pattern from the input image information, based on the constituent elements detected by the detecting section.

(11) The image-processing apparatus of item 10, wherein the suitable resolution level is individually determined corresponding to the subject pattern.

(12) The image-processing apparatus of item 10, wherein the suitable resolution level is individually determined corresponding to size information of the subject pattern residing in the input image information.

(13) The image-processing apparatus of item 10, wherein the multi-resolution conversion processing is a Dyadic Wavelet transform.

(14) The image-processing apparatus of item 10, wherein the input image information represents a color image, and the constituent elements of the subject pattern are extracted from the input image information by employing a signal value corresponding to a specific color coordinate within a color space, which is determined corresponding to the constituent elements.

(15) An image-processing apparatus, comprising: an image information acquiring section to acquire input image information from an image by means of one of various kinds of image inputting devices; a setting section to set a subject pattern including one or more constituent elements from the input image information acquired by the image information acquiring section; a size information acquiring section to acquire size information of the subject pattern residing in the input image information; a resolution converting section to convert a resolution of the input image information, based on the size information acquired by the size information acquiring section, so as to acquire resolution-converted image information of the image; a multi-resolution conversion processing section to apply a multi-resolution conversion processing to the resolution-converted image information; a detecting section to detect the constituent elements by employing a decomposed image of a suitable resolution level determined with respect to each of the constituent elements; and an extracting section to extract the subject pattern from the resolution-converted image information, based on the constituent elements detected by the detecting section.

(16) The image-processing apparatus of item 15, wherein the suitable resolution level and a resolution of the resolution-converted image information are individually determined corresponding to the subject pattern.

(17) The image-processing apparatus of item 15, wherein the multi-resolution conversion processing is a Dyadic Wavelet transform.

(18) The image-processing apparatus of item 15, wherein the input image information represents a color image, and the constituent elements of the subject pattern are extracted from the resolution-converted image information by employing a signal value corresponding to a specific color coordinate within a color space, which is determined corresponding to the constituent elements.

(19) A computer program for executing image-processing operations, comprising the functional steps of: acquiring input image information from an image by means of one of various kinds of image inputting devices; setting a subject pattern including one or more constituent elements from the input image information; applying a multi-resolution conversion processing to the input image information; detecting the constituent elements by employing a decomposed image of a suitable resolution level determined with respect to each of the constituent elements; and extracting the subject pattern from the input image information, based on the constituent elements detected in the detecting step.

(20) The computer program of item 19, wherein the suitable resolution level is individually determined corresponding to the subject pattern.

(21) The computer program of item 19, wherein the suitable resolution level is individually determined corresponding to size information of the subject pattern residing in the input image information.

(22) The computer program of item 19, wherein the multi-resolution conversion processing is a Dyadic Wavelet transform.

(23) The computer program of item 19, wherein the input image information represents a color image, and the constituent elements of the subject pattern are extracted from the input image information by employing a signal value corresponding to a specific color coordinate within a color space, which is determined corresponding to the constituent elements.

(24) A computer program for executing image-processing operations, comprising the functional steps of: acquiring input image information from an image by means of one of various kinds of image inputting devices; setting a subject pattern including one or more constituent elements from the input image information; acquiring size information of the subject pattern residing in the input image information; converting a resolution of the input image information, based on the size information, so as to acquire resolution-converted image information of the image; applying a multi-resolution conversion processing to the resolution-converted image information; detecting the constituent elements by employing a decomposed image of a suitable resolution level determined with respect to each of the constituent elements; and extracting the subject pattern from the resolution-converted image information, based on the constituent elements detected in the detecting step.

(25) The computer program of item 24, wherein the suitable resolution level and a resolution of the resolution-converted image information are individually determined corresponding to the subject pattern.

(26) The computer program of item 24, wherein the multi-resolution conversion processing is a Dyadic Wavelet transform.

(27) The image-processing program of item 24, wherein the input image information represents a color image, and the constituent elements of the subject pattern are extracted from the resolution-converted image information by employing a signal value corresponding to a specific color coordinate within a color space, which is determined corresponding to the constituent elements.

(28) An image-processing method, comprising the steps of: acquiring first image information at a predetermined first resolution from an image by means of one of various kinds of image inputting devices; setting a subject pattern including one or more constituent elements from the first image information; extracting information pertaining to the subject pattern from the first image information, in order to conduct an evaluation of the information; establishing a second resolution based on a result of the evaluation conducted in the extracting step, so as to acquire second image information at the second resolution; applying a multi-resolution conversion processing to the second image information; detecting the constituent elements by employing a decomposed image of a suitable resolution level determined with respect to each of the constituent elements; and extracting the subject pattern, based on the constituent elements detected in the detecting step.

(29) An image-processing apparatus, comprising: a first image-information acquiring section to acquire first image information at a predetermined first resolution from an image by means of one of various kinds of image inputting devices; a setting section to set a subject pattern including one or more constituent elements from the first image information; an information extracting section to extract information pertaining to the subject pattern from the first image information, in order to conduct an evaluation of the information; a resolution establishing section to establish a second resolution based on a result of the evaluation conducted by the information extracting section, so as to acquire second image information at the second resolution; a multi-resolution conversion processing section to apply a multi-resolution conversion processing to the second image information; a detecting section to detect the constituent elements by employing a decomposed image of a suitable resolution level determined with respect to each of the constituent elements; and an extracting section to extract the subject pattern, based on the constituent elements detected by the detecting section.

(30) A computer program for executing image-processing operations, comprising the functional steps of: acquiring first image information at a predetermined first resolution from an image by means of one of various kinds of image inputting devices; setting a subject pattern including one or more constituent elements from the first image information; extracting information pertaining to the subject pattern from the first image information, in order to conduct an evaluation of the information; establishing a second resolution based on a result of the evaluation conducted in the extracting step, so as to acquire second image information at the second resolution; applying a multi-resolution conversion processing to the second image information; detecting the constituent elements by employing a decomposed image of a suitable resolution level determined with respect to each of the constituent elements; and extracting the subject pattern, based on the constituent elements detected in the detecting step.

(31) An image-processing method, comprising the steps of: acquiring input image information from an image by means of one of various kinds of image inputting devices; setting a subject pattern including one or more constituent elements from the input image information; applying a multi-resolution conversion processing to the input image information, so as to acquire a decomposed image of a suitable resolution level determined with respect to each of the constituent elements; conducting an operation for detecting the constituent elements by employing the decomposed image acquired in the applying step, so as to specify the subject pattern based on a situation of detecting the constituent elements; and applying a predetermined image-processing to at least one of the constituent elements detected in the conducting step.

(32) The image-processing method of item 31, precedent to the step of acquiring the input image information, further comprising the steps of: acquiring prior image information at a predetermined first resolution from the image; setting the subject pattern from the prior image information; extracting information pertaining to the subject pattern from the prior image information, in order to conduct an evaluation of the information; and establishing a second resolution based on a result of the evaluation conducted in the extracting step, so as to acquire the input image information at the second resolution.

(33) An image-processing apparatus, comprising: an image information acquiring section to acquire input image information from an image by means of one of various kinds of image inputting devices; a setting section to set a subject pattern including one or more constituent elements from the input image information; a multi-resolution conversion processing section to apply a multi-resolution conversion processing to the input image information, so as to acquire a decomposed image of a suitable resolution level determined with respect to each of the constituent elements; a detecting section to conduct an operation for detecting the constituent elements by employing the decomposed image acquired by the multi-resolution conversion processing section, so as to specify the subject pattern based on a situation of detecting the constituent elements; and an image-processing section to apply a predetermined image-processing to at least one of the constituent elements detected by the detecting section.

(34) The image-processing apparatus of item 33, wherein, precedent to acquiring the input image information, the image information acquiring section acquires prior image information at a predetermined first resolution from the image, and the setting section sets the subject pattern from the prior image information; and further comprising: an information extracting section to extract information pertaining to the subject pattern from the prior image information, in order to conduct an evaluation of the information; and a resolution establishing section to establish a second resolution based on a result of the evaluation conducted by the information extracting section, so as to acquire the input image information at the second resolution.

(35) A computer program for executing image-processing operations, comprising the functional steps of: acquiring input image information from an image by means of one of various kinds of image inputting devices; setting a subject pattern including one or more constituent elements from the input image information; applying a multi-resolution conversion processing to the input image information, so as to acquire a decomposed image of a suitable resolution level determined with respect to each of the constituent elements; conducting an operation for detecting the constituent elements by employing the decomposed image acquired in the applying step, so as to specify the subject pattern based on a situation of detecting the constituent elements; and applying a predetermined image-processing to at least one of the constituent elements detected in the conducting step.

(36) The computer program of item 35, precedent to the functional step of acquiring the input image information, further comprising the functional steps of: acquiring prior image information at a predetermined first resolution from the image; setting the subject pattern from the prior image information; extracting information pertaining to the subject pattern from the prior image information, in order to conduct an evaluation of the information; and establishing a second resolution based on a result of the evaluation conducted in the extracting step, so as to acquire the input image information at the second resolution.

(37) A method for conducting an image-compensation processing, comprising the steps of: acquiring input image information from an image; dividing the input image information into a plurality of image areas; determining a compensating amount of image characteristic value with respect to each of the plurality of image areas; evaluating a boundary characteristic of each of boundaries between the plurality of image areas, so as to output an evaluation result of the boundary characteristic; and determining a boundary-compensating amount with respect to each of boundary areas in the vicinity of the boundaries, based on the evaluation result of the boundary characteristic evaluated in the evaluating step.

(38) The method of item 37, wherein the image-compensation processing includes at least one of a gradation compensation of image signal value, an image tone compensation for color image, a saturation compensation, a sharpness compensation and a granularity compensation.

(39) The method of item 37, wherein the boundary characteristic of each of the boundaries is evaluated, based on a result of applying a multi-resolution conversion processing to the input image information acquired from the image.

(40) The method of item 37, wherein the image-compensation processing includes at least one of a gradation compensation for image signal value, an image tone compensation for color image and a saturation compensation, and is applied to a low frequency band component, generated by applying a multi-resolution conversion processing to the input image information acquired from the image, at each level of its inverse-conversion operations.

(41) The method of item 39, wherein the multi-resolution conversion processing is a Dyadic Wavelet transform.

(42) The method of item 37, wherein the input image information, acquired from the image, represent a color image composed of a three-dimensional color space, and an operation of evaluating the boundary characteristic of each of the boundaries and/or the image-compensation processing are/is conducted, based on image information of at least one dimension on the three-dimensional color space, determined corresponding to contents of the image-compensation processing; and wherein, with respect to the image-compensation processing, information of the dimension on the three-dimensional color space pertain to a brightness or a saturation of the color image, while, with respect to the operation of evaluating the boundary characteristic, information of the dimension on the three-dimensional color space pertain to a brightness, a saturation or a hue of the color image.

(43) The method of item 39, wherein the image-compensation processing includes at least one of a sharpness compensation and a granularity compensation of image signal value; and wherein the multi-resolution conversion processing is a Dyadic Wavelet transform.

(44) The method of item 43, wherein the input image information, acquired from the image, represent a color image composed of a three-dimensional color space, and an operation of evaluating the boundary characteristic of each of the boundaries and/or the image-compensation processing are/is conducted, based on image information of at least one dimension on the three-dimensional color space, determined corresponding to contents of the image-compensation processing; and wherein, with respect to the image-compensation processing, information of the dimension on the three-dimensional color space pertain to a brightness or a saturation of the color image, while, with respect to the operation of evaluating the boundary characteristic, information of the dimension on the three-dimensional color space pertain to a brightness of the color image.

(45) An apparatus for conducting an image-compensation processing, comprising: an acquiring section to acquire input image information from an image; a dividing section to divide the input image information into a plurality of image areas; a first determining section to determine a compensating amount of image characteristic value with respect to each of the plurality of image areas; an evaluating section to evaluate a boundary characteristic of each of boundaries between the plurality of image areas, so as to output an evaluation result of the boundary characteristic; and a second determining section to determine a boundary-compensating amount with respect to each of boundary areas in the vicinity of the boundaries, based on the evaluation result of the boundary characteristic evaluated by the evaluating section.

(46) The apparatus of item 45, wherein the image-compensation processing includes at least one of a gradation compensation of image signal value, an image tone compensation for color image, a saturation compensation, a sharpness compensation and a granularity compensation.

(47) The apparatus of item 45, wherein the evaluating section evaluates the boundary characteristic of each of the boundaries, based on a result of applying a multi-resolution conversion processing to the input image information acquired from the image.

(48) The apparatus of item 45, wherein the image-compensation processing includes at least one of a gradation compensation for image signal value, an image tone compensation for color image and a saturation compensation, and is applied to a low frequency band component, generated by applying a multi-resolution conversion processing to the input image information acquired from the image, at each level of its inverse-conversion operations.

(49) The apparatus of item 47, wherein the multi-resolution conversion processing is a Dyadic Wavelet transform.

(50) The apparatus of item 45, wherein the input image information, acquired from the image, represent a color image composed of a three-dimensional color space, and an operation of evaluating the boundary characteristic of each of the boundaries and/or the image-compensation processing are/is conducted, based on image information of at least one dimension on the three-dimensional color space, determined corresponding to contents of the image-compensation processing; and wherein, with respect to the image-compensation processing, information of the dimension on the three-dimensional color space pertain to a brightness or a saturation of the color image, while, with respect to the operation of evaluating the boundary characteristic, information of the dimension on the three-dimensional color space pertain to a brightness, a saturation or a hue of the color image.

(51) The apparatus of item 46, wherein the image-compensation processing includes at least one of a sharpness compensation and a granularity compensation of image signal value; and wherein the multi-resolution conversion processing is a Dyadic Wavelet transform.

(52) The apparatus of item 51, wherein the input image information, acquired from the image, represent a color image composed of a three-dimensional color space, and an operation of evaluating the boundary characteristic of each of the boundaries and/or the image-compensation processing are/is conducted, based on image information of at least one dimension on the three-dimensional color space, determined corresponding to contents of the image-compensation processing; and wherein, with respect to the image-compensation processing, information of the dimension on the three-dimensional color space pertain to a brightness or a saturation of the color image, while, with respect to the operation of evaluating the boundary characteristic, information of the dimension on the three-dimensional color space pertain to a brightness of the color image.

(53) A computer program for executing an image-compensation processing, comprising the functional steps of: acquiring input image information from an image; dividing the input image information into a plurality of image areas; determining a compensating amount of image characteristic value with respect to each of the plurality of image areas; evaluating a boundary characteristic of each of boundaries between the plurality of image areas, so as to output an evaluation result of the boundary characteristic; and determining a boundary-compensating amount with respect to each of boundary areas in the vicinity of the boundaries, based on the evaluation result of the boundary characteristic evaluated in the evaluating step.

(54) The computer program of item 53, wherein the image-compensation processing includes at least one of a gradation compensation of image signal value, an image tone compensation for color image, a saturation compensation, a sharpness compensation and a granularity compensation.

(55) The computer program of item 53, wherein the boundary characteristic of each of the boundaries is evaluated, based on a result of applying a multi-resolution conversion processing to the input image information acquired from the image.

(56) The computer program of item 53, wherein the image-compensation processing includes at least one of a gradation compensation for image signal value, an image tone compensation for color image and a saturation compensation, and is applied to a low frequency band component, generated by applying a multi-resolution conversion processing to the input image information acquired from the image, at each level of its inverse-conversion operations.

(57) The computer program of item 55, wherein the multi-resolution conversion processing is a Dyadic Wavelet transform.
(58) The computer program of item 53, wherein the input image information, acquired from the image, represent a color image composed of a three-dimensional color space, and an operation of evaluating the boundary characteristic of each of the boundaries and/or the image-compensation processing are/is conducted, based on image information of at least one dimension on the three-dimensional color space, determined corresponding to contents of the image-compensation processing; and wherein, with respect to the image-compensation processing, information of the dimension on the three-dimensional color space pertain to a brightness or a saturation of the color image, while, with respect to the operation of evaluating the boundary characteristic, information of the dimension on the three-dimensional color space pertain to a brightness, a saturation or a hue of the color image.
(59) The computer program of item 55, wherein the image-compensation processing includes at least one of a sharpness compensation and a granularity compensation of image signal value; and wherein the multi-resolution conversion processing is a Dyadic Wavelet transform.
(60) The computer program of item 59, wherein the input image information, acquired from the image, represent a color image composed of a three-dimensional color space, and an operation of evaluating the boundary characteristic of each of the boundaries and/or the image-compensation processing are/is conducted, based on image information of at least one dimension on the three-dimensional color space, determined corresponding to contents of the image-compensation processing; and wherein, with respect to the image-compensation processing, information of the dimension on the three-dimensional color space pertain to a brightness or a saturation of the color image, while, with respect to the operation of evaluating the boundary characteristic, information of the dimension on the three-dimensional color space pertain to a brightness of the color image.

Further, to overcome the abovementioned problems, other image-processing methods, apparatus and computer programs, embodied in the present invention, will be described as follow:

(61) An image-processing method, characterized in that,

in the image-processing method, in which input image information are acquired from various kinds of image inputting means to extract a subject pattern including one or more constituent elements from the input image information,

a multi-resolution conversion processing is conducted for the input image information, and each of the constituent elements is detected by employing a decomposed image of a suitable resolution level predetermined with respect to each of the constituent elements to extract the subject pattern structured by the constituent elements.

(62) The image-processing method, described in item 61, characterized in that,

the suitable resolution level is individually determined corresponding to the subject pattern.

(63) The image-processing method, described in item 61 or item 62, characterized in that,

the suitable resolution level is individually determined corresponding to size information residing in the input image information.

(64) The image-processing method, described in anyone of items 61 - 63, characterized in that,

the multi-resolution conversion processing is a processing by a Dyadic Wavelet transform.

(65) The image-processing method, described in anyone of items 61 - 64, characterized in that,

the input image information are a color image, and the operation for extracting the constituent elements of the subject pattern is conducted by employing a signal value corresponding to a specific color coordinate in a color space, which is determined corresponding to the constituent elements.

(66) An image-processing method, characterized in that,

in the image-processing method, in which input image information are acquired from various kinds of image inputting means to extract a subject pattern including one or more constituent elements from the input image information,

size information residing in the input image information are acquired, and a resolution converted image is acquired by converting the resolution of the input image information based on the size information, and a multi-resolution conversion processing is applied to the resolution converted image, and each of the constituent elements is detected by employing a decomposed image of a suitable resolution level predetermined with respect to each of the constituent elements to extract the subject pattern structured by the constituent elements.

(67) The image-processing method, described in item 66, characterized in that,

the suitable resolution level and a resolution of the resolution converted image are individually determined corresponding to the subject pattern.

(68) The image-processing method, described in item 66 or item 67, characterized in that,

the multi-resolution conversion processing is a processing by a Dyadic Wavelet transform.

(69) The image-processing method, described in anyone of items 66 - 68, characterized in that,

the input image information are a color image, and the operation for extracting the constituent elements of the subject pattern is conducted by employing a signal value corresponding to a specific color coordinate in a color space, which is determined corresponding to the constituent elements.

(70) An image-processing apparatus, characterized in that,

in the image-processing apparatus, which includes an image-processing means for acquiring input image information from various kinds of image inputting means and for extracting a subject pattern including one or more constituent elements from the input image information,

the image-processing means conducts a multi-resolution conversion processing for the input image information, and detects each of the constituent elements by employing a decomposed image of a suitable resolution level predetermined with respect to each of the constituent elements to extract the subject pattern structured by the constituent elements.

(71) The image-processing apparatus, described in item 70, characterized in that,

the suitable resolution level is individually determined corresponding to the subject pattern.

(72) The image-processing apparatus, described in item 70 or item 71, characterized in that,

the suitable resolution level is individually determined corresponding to size information residing in the input image information.

(73) The image-processing apparatus, described in anyone of items 70 - 72, characterized in that,

the multi-resolution conversion processing is a processing by a Dyadic Wavelet transform.

(74) The image-processing apparatus, described in anyone of items 70 - 73, characterized in that,

the input image information are a color image, and the operation for extracting the constituent elements of the subject pattern is conducted by employing a signal value corresponding to a specific color coordinate in a color space, which is determined corresponding to the constituent elements.

(75) An image-processing apparatus, characterized in that,

in the image-processing apparatus, which includes an image-processing means for acquiring input image information from various kinds of image inputting means and for extracting a subject pattern including one or more constituent elements from the input image information,

the image-processing means acquires size information residing in the input image information, and acquires a resolution converted image by converting the resolution of the input image information based on the size information, and applies a multi-resolution conversion processing to the resolution converted image, and detects each of the constituent elements by employing a decomposed image of a suitable resolution level predetermined with respect to each of the constituent elements to extract the subject pattern structured by the constituent elements.

(76) The image-processing apparatus, described in item 75, characterized in that,

the suitable resolution level and a resolution of the resolution converted image are individually determined corresponding to the subject pattern.

(77) The image-processing apparatus, described in item 75 or item 76, characterized in that,

the multi-resolution conversion processing is a processing by a Dyadic Wavelet transform.

(78) The image-processing apparatus, described in anyone of items 75 - 77, characterized in that,

the input image information are a color image, and the operation for extracting the constituent elements of the subject pattern is conducted by employing a signal value corresponding to a specific color coordinate in a color space, which is determined corresponding to the constituent elements.

(79) An image-processing program, characterized in that,

in the image-processing program, which has a function for making an image-processing means to acquire input image information from various kinds of image inputting means and to extract a subject pattern including one or more constituent elements from the input image information,

the image-processing program conducts a multi-resolution conversion processing for the input image information, and detects each of the constituent elements by employing a decomposed image of a suitable resolution level predetermined with respect to each of the constituent elements to extract the subject pattern structured by the constituent elements.

(80) The image-processing program, described in item 79, characterized in that,

the suitable resolution level is individually determined corresponding to the subject pattern.

(81) The image-processing program, described in item 79 or item 80, characterized in that,

the suitable resolution level is individually determined corresponding to size information residing in the input image information.

(82) The image-processing program, described in anyone of items 79 - 81, characterized in that,

the multi-resolution conversion processing is a processing by a Dyadic Wavelet transform.

(83) The image-processing program, described in anyone of items 79 - 82, characterized in that,

the input image information are a color image, and the operation for extracting the constituent elements of the subject pattern is conducted by employing a signal value corresponding to a specific color coordinate in a color space, which is determined corresponding to the constituent elements.

(84) An image-processing program, characterized in that,

in the image-processing program, which has a function for making an image-processing means to acquire input image information from various kinds of image inputting means and to extract a subject pattern including one or more constituent elements from the input image information,

the image-processing program has a function for making an image-processing means to acquire size information residing in the input image information, and to acquire a resolution converted image by converting the resolution of the input image information based on the size information, and to apply a multi-resolution conversion processing to the resolution converted image, and to detect each of the constituent elements by employing a decomposed image of a suitable resolution level predetermined with respect to each of the constituent elements to extract the subject pattern structured by the constituent elements.

(85) The image-processing program, described in item 84, characterized in that,

the suitable resolution level and a resolution of the resolution converted image are individually determined corresponding to the subject pattern.

(86) The image-processing program, described in item 84 or item 25, characterized in that,

the multi-resolution conversion processing is a processing by a Dyadic Wavelet transform.

(87) The image-processing program, described in anyone of items 84 - 86, characterized in that,

the input image information are a color image, and the operation for extracting the constituent elements of the subject pattern is conducted by employing a signal value corresponding to a specific color coordinate in a color space, which is determined corresponding to the constituent elements.

(88) An image-processing method, characterized in that,

in the image-processing method, in which input image information are acquired from various kinds of image inputting means to extract a subject pattern including one or more constituent elements from the input image information,

first image information are acquired at a first predetermined resolution, and information with respect to the subject pattern are extracted to conduct an evaluation, and second image information are acquired by establishing a second resolution based on the evaluation, and further, a multi-resolution conversion processing is applied to the second image information, and each of the constituent elements is detected by employing a decomposed image of a suitable resolution level predetermined with respect to each of the constituent elements to extract the subject pattern structured by the constituent elements detected.

(89) An image-processing apparatus, characterized in that,

in the image-processing apparatus, which includes an image-processing means for acquiring input image information from various kinds of image inputting means and for extracting a subject pattern including one or more constituent elements from the input image information,

the image-processing means acquires first image information at a first predetermined resolution, and extracts information with respect to the subject pattern to conduct an evaluation, and acquires second image information by establishing a second resolution based on the evaluation, and further, applies a multi-resolution conversion processing to the second image information, and detects each of the constituent elements by employing a decomposed image of a suitable resolution level predetermined with respect to each of the constituent elements to extract the subject pattern structured by the constituent elements detected.

(90) An image-processing program, characterized in that,

in the image-processing program, which has a function for making an image-processing means to acquire input image information from various kinds of image inputting means and to extract a subject pattern including one or more constituent elements from the input image information,

the image-processing program acquires first image information at a first predetermined resolution, and extracts information with respect to the subject pattern to conduct an evaluation, and acquires second image information by establishing a second resolution based on the evaluation, and further, applies a multi-resolution conversion processing to the second image information, and detects each of the constituent elements by employing a decomposed image of a suitable resolution level predetermined with respect to each of the constituent elements to extract the subject pattern structured by the constituent elements detected.

(91) An image-processing method, characterized in that,

in the image-processing method, in which input image information are acquired from various kinds of image inputting means to extract a subject pattern including one or more constituent elements from the input image information,

a multi-resolution conversion processing is applied to the input image information, and each of the constituent elements is detected by employing a decomposed image of a suitable resolution level predetermined with respect to each of the constituent elements, and the subject pattern is specified, based on detecting status of them, to conduct a predetermined image processing for at least one of the constituent elements detected.

(92) The image-processing method, described in item 91, characterized in that,

preceding to the acquisition of the image information, pre-image information is acquired at a first predetermined resolution, and information with respect to the subject pattern are extracted to conduct an evaluation, and a second resolution established based on the evaluation is established, and then, the image information is acquired at the second resolution.

(93) An image-processing apparatus, characterized in that,

in the image-processing apparatus, which includes an image-processing means for acquiring input image information from various kinds of image inputting means, and for extracting a subject pattern including one or more constituent elements from the input image information to conduct image-processing, so as to acquire output image information,

the image-processing means applies a multi-resolution conversion processing to the input image information, and detects each of the constituent elements by employing a decomposed image of a suitable resolution level predetermined with respect to each of the constituent elements, and specifies the subject pattern, based on detecting status of them, to conduct a predetermined image processing for at least one of the constituent elements detected.

(94) The image-processing apparatus, described in item 93, characterized in that,

preceding to the acquisition of the image information, the image-processing means acquires pre-image information at a first predetermined resolution, and extracts information with respect to the subject pattern to conduct an evaluation, and establishes a second resolution established based on the evaluation, and then, acquires the image information at the second resolution.

(95) An image-processing program, characterized in that,

in the image-processing program, which has a function for making an image-processing means to acquire input image information from various kinds of image inputting means, and to extract a subject pattern including one or more constituent elements from the input image information to conduct image-processing, so as to acquire output image information,

the image-processing program applies a multi-resolution conversion processing to the input image information, and detects each of the constituent elements by employing a decomposed image of a suitable resolution level predetermined with respect to each of the constituent elements, and specifies the subject pattern, based on detecting status of them, to conduct a predetermined image processing for at least one of the constituent elements detected.

(96) The image-processing program, described in item 95, characterized in that,

preceding to the acquisition of the image information, the image-processing program acquires pre-image information at a first predetermined resolution, and extracts information with respect to the subject pattern to conduct an evaluation, and establishes a second resolution established based on the evaluation, and then, acquires the image information at the second resolution.

(97) An image-processing method, characterized in that,

in the image-processing method, in which an image is divided into a plurality of areas, and a compensation amount for an image characteristic value is established for every area to conduct a image compensation processing,

characteristics of boundaries between the plurality of areas are evaluated, so as to establish compensation amounts for areas in the vicinity of the boundaries corresponding to the characteristics of boundaries evaluated.

(98) The image-processing method, described in item 97, characterized in that,

the image compensation processing includes at least one of compensations, such as a gradation compensation for image signal value, an image tone compensation for color image, a saturation compensation, a sharpness compensation and a granularity compensation.

(99) The image-processing method, described in item 97 or item 98, characterized in that,

the evaluation for the characteristics of boundaries is conducted, based on a result of applying multi-resolution conversion processing to input image information.

(100) The image-processing method, described in anyone of items 97 - 99, characterized in that,

the image compensation processing includes at least one of compensations, such as a gradation compensation for image signal value, an image tone compensation for color image and a saturation compensation, and is applied to a low frequency image generated, by applying a multi-resolution conversion processing to input image information, at each level of its inverse-conversion operation.

(101) The image-processing method, described in item 99 or item 100, characterized in that,

the multi-resolution conversion processing is a processing by a Dyadic Wavelet transform.

(102) The image-processing method, described in anyone of items 97 - 101, characterized in that,

input image information are a color image composed of a three-dimensional color space, and the evaluation of the characteristics of boundaries and/or the image compensation processing are/is conducted, based on image information of at least one dimension on the color space, determined corresponding to contents of the image compensation processing, and further, with respect to the image compensation processing, the at least one dimension on the color space is information pertaining to a brightness of a color image or a saturation, while, with respect to the evaluation of the characteristics, information pertaining to a brightness, a saturation or a hue.

(103) The image-processing method, described in item 99 or item 100, characterized in that,

the image compensation processing includes at least one of compensations, such as a sharpness compensation of image signal value, a granularity compensation, and the multi-resolution conversion processing is a processing by a Dyadic Wavelet transform.

(104) The image-processing method, described in item 103, characterized in that,

input image information are a color image composed of a three-dimensional color space, and the evaluation of the characteristics of boundaries and/or the image compensation processing are/is conducted, based on image information of at least one dimension on the color space, determined corresponding to contents of the image compensation processing, and further, with respect to the image compensation processing, the at least one dimension on the color space is information pertaining to a brightness of a color image or a saturation, while, with respect to the evaluation of the characteristics, information pertaining to a brightness.

(105) An image-processing apparatus, characterized in that,

in the image-processing apparatus, which has an image-processing means for dividing an image into a plurality of areas, and for establishing a compensation amount for an image characteristic value for every area to conduct a image compensation processing,

the image-processing apparatus evaluates characteristics of boundaries between the plurality of areas so as to establish compensation amounts for areas in the vicinity of the boundaries corresponding to the characteristics of boundaries evaluated.

(106) The image-processing apparatus, described in item 105, characterized in that,

the image-processing means conducts the image compensation processing includes at least one of compensations, such as a gradation compensation for image signal value, an image tone compensation for color image, a saturation compensation, a sharpness compensation and a granularity compensation.

(107) The image-processing apparatus, described in item 105 or item 106, characterized in that,

the image-processing means conducts the evaluation for the characteristics of boundaries, based on a result of applying multi-resolution conversion processing to input image information.

(108) The image-processing apparatus, described in anyone of items 105 - 107, characterized in that,

the image-processing means conducts the image compensation processing includes at least one of compensations, such as a gradation compensation for image signal value, an image tone compensation for color image and a saturation compensation, and conducts the image compensation processing for a low frequency image generated, by applying a multi-resolution conversion processing to input image information, at each level of its inverse-conversion operation.

(109) The image-processing apparatus, described in item 107 or item 108, characterized in that,

the multi-resolution conversion processing is a processing by a Dyadic Wavelet transform.

(110) The image-processing apparatus, described in anyone of items 105 - 109, characterized in that,

input image information are a color image composed of a three-dimensional color space, and the image-processing means conducts the evaluation of the characteristics of boundaries and/or the image compensation processing, based on image information of at least one dimension on the color space, determined corresponding to contents of the image compensation processing, and further, with respect to the image compensation processing, the at least one dimension on the color space is information pertaining to a brightness of a color image or a saturation, while, with respect to the evaluation of the characteristics, information pertaining to a brightness, a saturation or a hue.

(111) The image-processing apparatus, described in item 106 or item 107, characterized in that,

the image compensation processing includes at least one of compensations, such as a sharpness compensation of image signal value, a granularity compensation, and the multi-resolution conversion processing is a processing by a Dyadic Wavelet transform.

(112) The image-processing apparatus, described in item 111, characterized in that,

input image information are a color image composed of a three-dimensional color space, and the image-processing means conducts the evaluation of the characteristics of boundaries and/or the image compensation processing, based on image information of at least one dimension on the color space, determined corresponding to contents of the image compensation processing, and further, with respect to the image compensation processing, the at least one dimension on the color space is information pertaining to a brightness of a color image or a saturation, while, with respect to the evaluation of the characteristics, information pertaining to a brightness.

(113) An image-processing program, characterized in that,

the image-processing program has a function for making an image-processing means, for dividing an image into a plurality of areas, and for establishing a compensation amount for an image characteristic value for every area to conduct a image compensation processing, to evaluate characteristics of boundaries between the plurality of areas so as to establish compensation amounts for areas in the vicinity of the boundaries corresponding to the characteristics of boundaries evaluated.

(114) The image-processing program, described in item 113, characterized in that,

the image compensation processing includes at least one of compensations, such as a gradation compensation for image signal value, an image tone compensation for color image, a saturation compensation, a sharpness compensation and a granularity compensation.

(115) The image-processing program, described in item 113 or item 114, characterized in that,

the evaluation for the characteristics of boundaries is conducted, based on a result of applying multi-resolution conversion processing to input image information.

(116) The image-processing program, described in anyone of items 113 - 115, characterized in that,

the image compensation processing includes at least one of compensations, such as a gradation compensation for image signal value, an image tone compensation for color image and a saturation compensation, and is applied to a low frequency image generated, by applying a multi-resolution conversion processing to input image information, at each level of its inverse-conversion operation.

(117) The image-processing program, described in item 115 or item 116, characterized in that,

the multi-resolution conversion processing is a processing by a Dyadic Wavelet transform.

(118) The image-processing program, described in anyone of items 113 - 117, characterized in that,

input image information are a color image composed of a three-dimensional color space, and the evaluation of the characteristics of boundaries and/or the image compensation processing are/is conducted, based on image information of at least one dimension on the color space, determined corresponding to contents of the image compensation processing, and further, with respect to the image compensation processing, the at least one dimension on the color space is information pertaining to a brightness of a color image or a saturation, while, with respect to the evaluation of the characteristics, information pertaining to a brightness, a saturation or a hue.

(119) The image-processing program, described in item 117 or item 116, characterized in that,

the image compensation processing includes at least one of compensations, such as a sharpness compensation of image signal value, a granularity compensation, and the multi-resolution conversion processing is a processing by a Dyadic Wavelet transform.

(120) The image-processing program, described in item 119, characterized in that,

input image information are a color image composed of a three-dimensional color space, and the evaluation of the characteristics of boundaries and/or the image compensation processing are/is conducted, based on image information of at least one dimension on the color space, determined corresponding to contents of the image compensation processing, and further, with respect to the image compensation processing, the at least one dimension on the color space is information pertaining to a brightness of a color image or a saturation, while, with respect to the evaluation of the characteristics, information pertaining to a brightness.

## BRIEF DESCRIPTION OF THE DRAWINGS

Other objects and advantages of the present invention will become apparent upon reading the following detailed description and upon reference to the drawings in which:

Fig. 1 shows a block diagram representing the basic configuration of a digital Minilab equipped with an image processing apparatus as an embodiment of the present invention;
Fig. 2 shows graphs representing wavelet functions;
Fig. 3 shows a conceptual block diagram of the wavelet transform;
Fig. 4 shows another conceptual block diagram of the wavelet transform;
Fig. 5 shows a conceptual block diagram of a signal-decomposing process using the wavelet transform;
Fig. 6 shows another conceptual block diagram of the wavelet transform;
Fig. 7 shows an example of image signals;
Fig. 8 shows a conceptual block diagram of the wavelet inverse-transform;
Fig. 9 shows another conceptual block diagram of the wavelet transform;
Fig. 10 shows another conceptual block diagram of the wavelet transform;
Fig. 11 shows an example of a subject pattern, indicating constituent elements;
Fig. 12 shows relationships between resolution levels and constituent elements to be detected;
Fig. 13 shows relationships between sizes of subject pattern and constituent elements to be detected;
Fig. 14(a) and Fig. 14(b) show examples of subject pattern and constituent elements;
Fig. 15(a) and Fig. 15(b) show explanatory drawings for explaining logic of combining a plurality of constituent elements;
Fig. 16 shows an explanatory drawing for explaining extraction of subject pattern;

Fig. 17(a) and Fig. 17(b) show explanatory drawings for explaining gradation compensation for plural subject patterns;
Fig. 18(a), Fig. 18(b) and Fig. 18(c) show explanatory drawings for explaining gradation compensation for plural subject patterns;
Fig. 19 shows a block diagram of a dogging-wise processing;
Fig. 20 shows an example of a mask employed for a dogging-wise processing;
Fig. 21 shows a block diagram of a dogging-wise processing;
Fig. 22 shows a block diagram of a dogging-wise processing;
Fig. 23 shows an example of area split processing with respect to sharpness and granularity;
Fig. 24 shows an exemplified flowchart of a program for executing an image-processing method, embodied in the present invention, and for functioning image-processing means of an image-processing apparatus, embodied in the present invention;
Fig. 25 shows another exemplified flowchart of a program for executing an image-processing method, embodied in the present invention, and for functioning image-processing means of an image-processing apparatus, embodied in the present invention;
Fig. 26 shows another exemplified flowchart of a program for executing an image-processing method, embodied in the present invention, and for functioning image-processing means of an image-processing apparatus, embodied in the present invention;
Fig. 27 shows another exemplified flowchart of a program for executing an image-processing method, embodied in the present invention, and for functioning image-processing means of an image-processing apparatus, embodied in the present invention;
Fig. 28 shows a flowchart of a process for compensating for red eyes
Fig. 29 shows another exemplified flowchart of a program for executing an image-processing method, embodied in the present invention, and for functioning image-processing means of an image-processing apparatus, embodied in the present invention; and
Fig. 30 shows another exemplified flowchart of a program for executing an image-processing method, embodied in the present invention, and for functioning image-processing means of an image-processing apparatus, embodied in the present invention.

## DETAILED DESCRIPTION OF THE PREFERRED EMBODIMENT

The following describes the preferred embodiments of the present invention using an example of a digital Minilab having come into widespread use in photo shops in recent years, wherein the digital Minilab provides services of writing an image on a print, CDR and recording medium in response to the customer order.
Fig. 1 is a block diagram representing the basic configuration of a digital Minilab equipped with an image processing apparatus as an embodiment of the present invention.
The image captured by a digital camera 1 (hereinafter referred to as "DSC") is stored in various image recording media such as Smart Media and Compact Flash (R), and is carried into a photo shop.
The image captured by the prior art camera 3 is subjected to development and is recorded on a film 4 as a negative or positive image.
The image from the DSC 1 is read as an image signal by a compatible medium driver 5, and the image of film 4 is converted into a signal image by a film scanner.
In the case of a reflective document, the type of image inputted into an image input section 7 - for example, the image inputted by a reflection scanner (not illustrated) such as a flat bed scanner or image information inputted via the LAN or Internet - is not restricted to the one from DSC 1. It is not illustrated here. Needless to say, these images can be provided with image processing to be described later.
The input image information captured by the image input section 7 is subjected to various types of processing, including image processing according to the present invention.
The output image information having undergone various types of processing is outputted to various types of output apparatuses. The image output apparatus includes a silver halide exposure printer 9 and injection printer 10. Further, image output information is may be recorded on various types of image recording media 11.
The functional sections, having functions for inputting and registering scene attributes, are coupled to the image processing section 8. Concretely speaking, the instruction input section 12, which incorporates a keyboard 13, a mouse 14 and a contact sensor 15 for designating position information by directly touching the screen of the image display section 16 while viewing the image displayed on the image display section 16, and an information storage section 17, for storing the information thus specified, inputted and registered, are coupled to the image processing section 8. Accordingly, the information stored in the information storage section 17 can be inputted into the image processing section 8, and the image, based on the image information processed in the image processing section 8, can be displayed on the image display section 16 so that the operator can monitor the image.

In the inspection input section 12, the scene attribute can be inputted, selected or specified. Here the scene attribute is defined as a keyword characteristic of the subject recorded on the photograph such as a photo type, motive for photographing and place of photographing. For example, a journey photograph, event photograph, nature photograph and portrait are included.

The film scanner 6 and media driver 5 are preferred to incorporate the function of reading such information from the film or media photographed by the camera provided with the function of storing the scene attribute or related information. This ensures the scene attribute information to be captured.

The information read by the film scanner 6 and media driver 5 includes various types of information recorded on the magnetic layer coated on the film in the APS (Advanced Photo System) of the silver halide camera. For example, it includes the PQI information set to improve the print quality and the message information set at the time of photographing and indicated on the print. The information read by the media driver 5 includes various types of information defined according to the type of the image recording format such as Exif, information described on the aforementioned silver halide photographic film and various types of other information recorded in some cases. It is possible to reach such information and use it effectively.

When there is information obtained from such media, scene attributes are obtained from such information or estimated from it. This function dispenses with time and effort for checking the scene attribute when receiving an order.

Further, it is possible to manage customer information in a photo shop and to set scene attributes separately for each customer. Alternatively, the customer information can be used as a scene attribute. This allows the preset customer preference to be searched easily when the priority to be described later is set. This method is preferred in improving work efficiency and customer satisfaction.

Such information and various types of information to be described later are stored in the information storage section 17 and are used whenever required.

The image processing section 8 as image processing means constituting the major portion of the image processing apparatus comprises a CPU 8a for performing computation, a memory 8b for storing various types of programs to be described later, a memory 8c as a work memory and an image processing circuit 8d for image processing computation.

The following describes the processing performed mainly by the image processing section 8:

When the scene attribute has been determined by various methods given above, the subject pattern to be extracted in response thereto is determined.

Here the subject pattern is defined as individual and specific subject, present in an image that can be identified, as will be shown. The information on subject pattern includes the subject pattern priority information (represented in terms of priority or weighing coefficient to be described later). It also includes information on the gradation and color tone representation preferred for the subject, as well as the information on the position, size, average gradation, gradation range and color tone of the subject pattern.

The subject pattern includes an ordinary person, a person wearing special clothing (uniform such as sports uniform) and a building (Japanese, Western, modern, historical, religious, etc.), as well as clouds, blue sky and sea.

The classification of the subject pattern may differ according to customer order. In the case of a "person" for example, it can be handled as information on one person independently of the number of persons. However, if the distinction between "student" and "ordinary person" (or "male" or "female") is meaningful to the customer, the person constitutes two types of subject patterns.

In cases where there is a distinction between a customer himself and other people, and among "bride", "bridegroom" and other attendants at an after-wedding celebration, or between Mr. A and Mr. B, then these individuals can be identified by the customer and hence must be treated as different subject patterns.

Methods of extracting a subject pattern are generally known. It is possible to select from such pattern extraction methods. It is also possible to set up a new extraction method.

As a desirable example, a method for extracting a subject pattern at a high accurate level by employing a multi-resolution conversion processing with a Dyadic Wavelet transform will be detailed in the following. The method is newly introduced by the present inventor.

The multi-resolution conversion is a processing for acquiring a plurality of decomposed images, which are decomposed from image information by dividing them at different resolution levels. Although the Dyadic Wavelet transform is desirably employed for this purpose, it is possible to employ other conversion methods, such as, for instance, an orthogonal wavelet transform and a bi-orthogonal wavelet transform.

Next, the wavelet transform will be briefly described in the following.

There has been well known the technology for applying the wavelet transform as an effective method for dividing every partial section of an image into frequency band components to conduct a suppressing/emphasizing operation for each of the frequency band components.

The wavelet transform are detailed in, for instance, "Wavelet and Filter Banks" by G. Strang & T. Nguyen, Wellesley-Cambridge Press and "A wavelet tour of signal processing 2ed." by S. Mallat, Academic Press. In this specification, the summary of them will be described in the following.

The wavelet transform is operated as follows: In the first place, the following wavelet function is used, where vibration is observed in a finite range as shown in Fig. 2:

$$\psi_{a,b}(x) = \psi\left(\frac{x-b}{a}\right) \qquad (1)$$

Using the above function, the wavelet transform coefficient <f, $\psi_{a,b}$> with respect to input signal f(x) is obtained by:

$$\left\langle f, \psi_{a,b} \right\rangle \equiv \frac{1}{a}\int f(x)\cdot\psi\left(\frac{x-b}{a}\right)dx \qquad (2)$$

Through this process, input signal is converted into the sum total of the wavelet function.

$$f(x) = \sum_{a,b}\left\langle f, \psi_{a,b}\right\rangle\cdot\psi_{a,b}(x) \qquad (3)$$

In the above equation, "a" denotes the scale of the wavelet function, and "b" the position of the wavelet function. As shown in Fig. 2, as the value "a" is greater, the frequency of the wavelet function $\psi_{a,b}(X)$ is smaller. The position where the wavelet function $\psi_{a,b}(x)$ vibrates moves according to the value of position "b". Thus, Eq. 3 signifies that the input signal f(x) is decomposed into the sum total of the wavelet function $\psi_{a,b}(x)$ having various scales and positions.

A great number of the wavelet functions are known, that allow the above-mentioned conversion. In the field of image processing, orthogonal wavelet and biorthogonal wavelet biorthogonal wavelet are put into common use. The following describes the overview of the conversion calculation of the orthogonal wavelet and biorthogonal wavelet.

Orthogonal wavelet and biorthogonal wavelet functions are defined as follows:

$$\psi_{i,j}(x) = 2^{-i}\,\psi\left(\frac{x - j\cdot 2^{i}}{2^{i}}\right) \qquad (4)$$

where "i" denotes a natural number.

Comparison between Eq. 4 and Eq. 1 shows that the value of scale "a" is defined discretely by an i-th power of "2", according to orthogonal wavelet and biorthogonal wavelet. This value "i" is called a level. In practical terms, level "i" is restricted up to finite upper limit N, and input signal is converted as follows:

$$f(x) \equiv S_0 = \sum_j\left\langle S_0, \psi_{1,j}\right\rangle\cdot\psi_{1,j}(x) + \sum_j\left\langle S_0, \phi_{1,j}\right\rangle\cdot\phi_{1,j}(x)$$

$$\equiv \sum_j W_1(j)\cdot\psi_{1,j}(x) + \sum_j S_1(j)\cdot\phi_{1,j}(x) \qquad (5)$$

$$S_{i-1} = \sum_j \left\langle S_{i-1}, \psi_{i,j} \right\rangle \cdot \psi_{i,j}(x) + \sum_j \left\langle S_{i-1}, \phi_{i,j} \right\rangle \cdot \phi_{i,j}(x)$$

$$\equiv \sum_j W_i(j) \cdot \psi_{i,j}(x) + \sum_j S_i(j) \cdot \phi_{i,j}(x) \qquad (6)$$

$$f(x) \equiv S_0 = \sum_{i=1}^{N} \sum_j W_i(j) \cdot \psi_{i,j}(x) + \sum_j S_N(j) \cdot \phi_{i,j}(x) \qquad (7)$$

The second term of Ex. 5 denotes that the low frequency band component of the residue that cannot be represented by the sum total of wavelet function $\psi_{1,\,j}(x)$ of level 1 is represented in terms of the sum total of scaling function $\phi_{1,\,j}(x)$. An adequate scaling function in response to the wavelet function is employed (See aforementioned documents). This means that input signal $f(x) \equiv S_0$ is decomposed into the high frequency band component $W_1$ and low frequency band component $S_i$ of level 1 by the wavelet transform of level 1 shown in Eq. 5. Since the wavelet function $\psi_{i,\,j}(x)$ of the minimum traveling unit of the wavelet function $\psi_{i,\,j}(x)$ is $2^i$, each of the signal volume of high frequency band component $W_1$ and low frequency band component $S_1$ with respect to the signal volume of input signal "$S_0$" is 1/2. The sum total of the signal volumes $W_1$ and $S_1$ is equal to the signal volume of input signal "$S_0$". The low frequency band component $S_1$ of level 1 is decomposed into high frequency band component $W_2$ and low frequency band component $S_2$ of level 2 by Eq. 6. After that, transform is repeated up to level N, whereby input signal "$S_0$" is decomposed into the sum total of the high frequency band components of levels 1 through N and the sum of the low frequency band components of level N, as shown in Fig. 7.

Here the wavelet transform of level 1 shown in Eq. 6 is known to be computed by filtering, as shown in Fig. 3 (See aforementioned documents). In Fig. 3, LPF denotes a low-pass filter and HPF a high-pass filter. An appropriate filter coefficient is determined in response to the wavelet function (See aforementioned documents and Table 1).

Table 1

| Biorthogonal Wavelet transform | | Inverse-transform | |
|---|---|---|---|
| HPF | LPF | HPF' | LPF' |
| | - 0.176777 | 0.176777 | |
| 0.353553 | 0.353553 | 0.353553 | 0.353553 |
| - 0.707107 | 1.06066 | -1.06066 | 0.707107 |
| 0.353553 | 0.353553 | 0.353553 | 0.353553 |
| | - 0.176777 | 0.176777 | |

Symbol 2↓ shows the down sampling where every other samples are removed (thinned out). The wavelet transform of level 1 in the secondary signal such as image signal is computed by the processing of filtering as shown in Fig. 4. In Fig. 4, LPFx, HPFx and 2↓x denote processing in the direction of "x", whereas LPFy, HPFy and 2↓y denote processing in the direction of "y". The low frequency band component $S_{n-1}$ is decomposed into three high frequency band components $Wv_n$, $Wh_n$, $Wd_n$ and one low frequency band component $S_n$ by the wavelet transform of level 1. Each of the signal volumes of $Wv_n$, $Wh_n$, $Wd_n$ and $S_n$ generated by decomposition is 1/2 that of the $S_{n-1}$ prior to decomposition in both vertical and horizontal directions. The total sum of signal volumes of four components subsequent to decomposition is equal to the signal $S_{n-1}$ prior to decomposition. Fig. 5 is a schematic diagram representing the process of the Input signal $S_0$ being decomposed by the wavelet transform of level 3.

Further, when wavelet inverse transform calculated by the filtering processing shown in Fig. 6 is applied to $Wv_n$, $Wh_n$, $Wd_n$ and $S_n$ generated by decomposition, the signal $S_{n-1}$ prior to decomposition is known to be re-configured completely. In Fig. 6, LPF' denotes a low-pass filter and HPF' a high-pass filter. In the case of orthogonal wavelet, the same coefficient as that used in the wavelet transform is used as this filter coefficient; whereas in the case of biorthogonal wavelet, the coefficient different from that used in the wavelet transform is used as this filter coefficient. (See the above-mentioned Reference Documents). Further, 2↑ denotes the up-sampling where zero is inserted into every other signals. The LPF'x, HPF'x and 2↑x denote processing in the direction of "x", whereas LPF'y, HPF'y and 2↓y denote processing in the direction of "y".

Incidentally, detailed explanations in regard to the Dyadic Wavelet transform, employed in the present invention, are set forth in "Singularity detection and processing with wavelets" by S. Mallat and W. L. Hwang, IEEE Trans. Inform. Theory 38 617 (1992), "Characterization of signal from multiscale edges" by S. Mallet and S. Zhong, IEEE Trans. Pattern Anal. Machine Intel. 14 710 (1992), and "A wavelet tour of signal processing 2ed." by S. Mallat, Academic Press. The summary of the Dyadic Wavelet transform will be described in the following.

The wavelet function of the Dyadic Wavelet is defined as follows:

$$\psi_{i,j}(x) = 2^{-i}\ \psi\left(\frac{x-j}{2^i}\right) \tag{8}$$

where "i" denotes a natural number.

Wavelet functions of orthogonal wavelet and biorthogonal wavelet are discretely defined when the minimum traveling unit of the position on level "i" is $2^i$, as described above. By contrast, in the two-term wavelet, the minimum traveling unit of the position is constant, despite level "i". This difference provides the Dyadic Wavelet transform with the following characteristics:

Characteristic 1: The signal volume of each of high frequency band component $W_i$ and low frequency band component $S_i$ generated by the Dyadic Wavelet transform is the same as that of signal $S_{i-1}$ prior to transform.

$$\begin{aligned} S_{i-1} &= \sum_j \left\langle S_{i-1}, \psi_{i,j}\right\rangle \cdot \psi_{i,j}(x) + \sum_j \left\langle S_{i-1}, \phi_{i,j}\right\rangle \cdot \phi_{i,j}(x) \\ &\equiv \sum_j W_i(j) \cdot \psi_{i,j}(x) + \sum_j S_i(j) \cdot \phi_{i,j}(x) \end{aligned} \tag{9}$$

Characteristic 2: The following relationship is found between the scaling function $\phi_{i,j}(x)$ and wavelet function $\psi_{i,j}(x)$ :

$$\psi_{i,j}(x) = \frac{\partial}{\partial x}\phi_{i,j}(x) \tag{10}$$

Thus, the high frequency band component $W_i$ generated by the Dyadic Wavelet transform represents the first differential (gradient) of the low frequency band component $S_i$.

Characteristic 3: With respect to $W_i \cdot \gamma_i$ (hereinafter referred to as "compensated high frequency band component) obtained by multiplying the coefficient $\gamma_i$ shown in Table 2 (see the above-mentioned Reference Document on Dyadic Wavelet)) determined in response to the level "i" of the Wavelet transform, by high frequency band component, the relationship between levels of the signal intensities of compensated high frequency band components $W_i \cdot \gamma_i$ subsequent to the above-mentioned transform obeys a certain rule, in response to the singularity of the changes of input signals. To put it another way, the signal intensity of the compensated high frequency band component $W_i \cdot \gamma_i$ corresponding to smooth (differentiatable) signal changes shown by 1 and 4 of Fig. 7 increases with level number "i"; whereas the signal intensity of the compensated high frequency band component $W_i \cdot \gamma_i$ corresponding to stepwise signal changes shown by 2 of Fig. 7 stays constant independently of the level number "i", and the signal intensity of the compensated high frequency band component $W_i \cdot \gamma_i$ corresponding to functional signal changes shown by 3 of Fig. 7 decreases with increase in level number "i".

Table 2

| i | $\gamma$ |
|---|---|
| 1 | 0.66666667 |
| 2 | 0.89285714 |
| 3 | 0.97087379 |
| 4 | 0.99009901 |
| 5 | 1 |

Characteristic 4: Unlike the above-mentioned method of orthogonal wavelet and biorthogonal wavelet, the method of Dyadic Wavelet transform on level 1 in the 2-D signals such as image signals is followed as shown in Fig. 8. The low frequency band component $S_{n-1}$ is decomposed into two high frequency band components $Wx_n$, $Wy_n$ and one low frequency band component $S_n$ by the wavelet transform of level 1. Two high frequency band components correspond to components x and y of the change vector $V_n$ in the two dimensions of the low frequency band component $S_n$. The magnitude $M_n$ of the change vector $V_n$ and angle of deflection $A_n$ are given by the following equation:

$$M_n = \sqrt{Wx_n^2 + Wy_n^2} \quad (11)$$

$$A_n = \text{argument}\ (Wx_n + iWy_n) \quad (12)$$

It has been known that $S_{n-1}$ prior to transform can be re-configured when the Dyadic Wavelet inverse transform shown in Fig. 9 is applied to two high frequency band components $Wx_n$, $Wy_n$ and one low frequency band component $S_n$.

Fig. 10 shows a concept of applying the Dyadic Wavelet transform of level N to input signals $S_0$. The Dyadic Wavelet transform of level N is applied to input signals $S_0$ to acquire high frequency band components and a low frequency band component. Then, the Dyadic Wavelet inverse-transform of level N is applied to the high frequency band components, after processing included in operation 1 are conducted for the high frequency band components as needed. In addition, processing included in operation 2 are conducted for the low frequency band component at each step of the aforementioned Dyadic Wavelet transform operations. Incidentally, in the exemplified embodiment of the present invention, operation 1 corresponds to the edge detection processing, the pattern detection processing, etc., while operation 2 corresponds to the mask processing.

In Fig. 10, LPF denotes a low-pass filter and HPF a high-pass filter. LPF' denotes a low-pass filter for inverse transform and HPF' a high-pass for inverse transform filter. These filter coefficients are determined as appropriate in conformity to the wavelet function (See the aforementioned Documents and Table 3).

Table 3

| n | HPF1 | LPF1 | HPF'1 | LPF'1 |
|---|---|---|---|---|
| - 3 | | | 0.0078125 | 0.0078125 |
| - 2 | | | 0.054685 | 0.046875 |
| - 1 | | 0.125 | 0.171875 | 0.1171875 |
| 0 | -2.0 | 0.375 | -0.171875 | 0.65625 |
| 1 | 2.0 | 0.375 | -0.054685 | 0.1171875 |
| 2 | | 0.125 | -0.0078125 | 0.046875 |
| 3 | | | | 0.0078125 |

Further, the LPFx, HPFx, LPF'x, HPF'x denote processing in the direction of "x", while the LPFy, HPFy, LPF'y and HPF'y denote processing in the direction of "y". In the Dyadic Wavelet the filter coefficient is different on each level. The filter coefficient on level n to be used is the one gained by inserting $2^{n-1}$ -1 zeros between coefficients of level 1 (See the aforementioned Documents and Table 3).

As described in Characteristic 1 of the Dyadic Wavelet transform, the image size of the decomposed image is the same as that of the original image prior to transform. Accordingly, it becomes possible to obtain a secondary feature that the evaluation with a high positional accuracy can be conducted in the image structural analysis as shown in Characteristic 3.

Next, referring to Fig. 11 - Fig. 13, an extracting operation of the subject pattern, which employs the multi-resolution conversion processing, will be detailed in the following.

The image is decomposed by applying the Dyadic Wavelet transform, serving as the multi-resolution conversion processing, and then, the edges emerged at each level of multi-resolution conversion are detected to conduct the area dividing operation.

Then the level of resolution to be used for pattern extraction is set according to the pattern to be extracted.

What is called as a pattern, especially what is generally recognized as a subject pattern, has inherent partial elements as well as contours in most cases.

In the case of a human head, there are eyes (pupils, iris, eyelashes, blood vessel on the white part), noise, month, cheek, dimple and eyebrow in addition to the contours of the head.

Of the aforementioned items, the partial elements useful for identification of the pattern to be extracted are ranked as "constituents" and the level of resolution used for pattern extraction is set for each of them.

As shown in Fig. 12, the human head contour itself is an edge extracted for an image of low-level resolution, and is identified clearly and accurately. In case of the gentle patterns of the constituent elements of the face present in the content, for example, the bridge of the nose, the profile of the lip, lines formed around the lip of a smiling face, "dimple", "swelling of the cheek", etc., their characteristics can be grasped accurately by using the edge information appearing on the image of higher level resolution.

The subject pattern constituent element determining method and preferred resolution level determining method for individual identification will be described using a preferred embodiment:

The constituent elements of the subject pattern are set. For example, in the case of a "human face", they correspond to various types of constituent elements stored in advance, as described below:

(An example of constituent elements for "human face")

a: Facial contour
b: Pupil
c: Eyebrow
d: Mouth
e: Hair
f: Bridge of the nose.
g: Nostril
h: Dents of the cheek

Further, when a particular person has been registered as a subject pattern, new constituent elements can be set in addition to the above items. This will lead to more effective identification of the individual.

(Example of constituent elements to be added for the "face of a specific person")

i: Stain and mole
j: Dimple
k: Mustache

In the case of a specific person, characteristics different from the general "human face" can be set for constituent elements a through f. Some constituent elements may be "absent".

After individual constituent elements have been set for the intended subject pattern, the image is subjected to multiple resolution transform by the Dyadic Wavelet transform to get the intensity of decomposition signal on each level of multiple resolution transformation for each constituent element, whereby the maximum level is obtained. The aforementioned maximum level can be used as the preferred resolution, but a slight level modification can be made by evaluating the actual result of image processing.

The signal in this case corresponds to the maximum value of the signal representing the edge component detected on each level. When comparing the signal intensities among multiple levels, it goes without saying that compensated high frequency band component described with reference to the aforementioned the Dyadic Wavelet transform is used as a signal value.

When the Dyadic Wavelet transform is used, the constituent element having a clearly defined contour such as a knife-edge pattern is characterized in that the edge signal level does not change very much, depending on the level of resolution. In this case, a suitable resolution level (hereinafter, also referred to as a preferred resolution level) should be the resolution on the level where the contour of the constituent elements can be clearly identified or the resolution on the lowest level if the original image resolution is not sufficient.

The aforementioned constituent elements can be classified as the ones characterized by clearer definition of the contour and the ones characterized by less clear definition.

For example, "a", "f" and "i" correspond to the former category, while the "f", "h" and "j" to the latter. Extraction and registration of the former constituent elements can be made by displaying the image on a monitor, specifying the relevant position with a mouse or contact type sensor, and cutting out the area in the vicinity automatically or manually.

I the latter case, it is difficult to clearly identify the area where the constituent elements are present from the area where they are not, and to cut them out. In such cases, it is sufficient to approximately specify the area where the constituent elements are present.

The preferred resolution set for such constituent elements is usually on the higher level than that of the former ones characterized by clearer definition of the contour.

Accordingly, if the latter constituent elements are to be extracted when the area is approximately specified as described above, the following steps can be taken to extract the intended constituent elements.

All the edges detected in the candidate areas for extraction of the constituent elements are extracted, and the signal intensity of each resolution level is compared for these edges.

In the image having a resolution lower than the preferred resolution level, the edge components where high signal intensity is detected are not assumed as being included in the relevant constituent elements, and are excluded from the candidate area. The remaining areas are checked on the preferred resolution level to extract the intended constituent elements.

In the aforementioned examples, the image prior to decomposition is displayed on the monitor and constituent elements are specified. For example, when a person having some knowledge about the image processing art specifies the constituent elements, the decomposed image having undergone actual resolution transformation is displayed on the monitor, and preferably, it is displayed in the configuration that allows comparison with the image prior to decomposition so that the constituent elements to be extracted can be specified on the displayed resolution level. This will allow easy finding of new characteristics that cannot be identified from the original image alone, and will further improve the subject pattern identification accuracy.

In the illustrated example, "A" denotes the pupils and edge of the upper eyelids, "B" the line around the lip and "C" the swelling of the cheek.

As described above, the features of the face can be accurately identified by detecting B rather than A and C rather than B, using the image having a higher resolution level.

Further, as illustrated, the level used for detection of the aforementioned constituent elements is set according to the pattern to be extracted. In this case, if the pattern to be extracted is sufficiently large, the characteristics of the elements constituting the pattern are effectively split, and it becomes possible to set the resolution level suited to each of the constituent elements. If the level used for detection of the aforementioned edge information is set, it becomes possible to detect the pattern using the information on finer details in the case of a large pattern, whereas in the case of a small pattern, it comes possible to perform the maximally effective and high-speed detection, using the information obtained from that size. Such excellent characteristics can be provided.

The size of the aforementioned pattern can be obtained from the size of a pattern gained by a separate step of temporary pattern detection. Alternatively, it is also possible to get it from the scene attribute (commemorative photo, portrait, etc.) and image size for the temporary purpose.

The temporary pattern extraction can be performed by the following methods:

When a face pattern is to be extracted, the area of skin color is first extracted from the screen, and the shape of the area is evaluated. If a round shape is detected, that area is extracted as a "candidate".

If there is a specific color as in the case of a uniform, the area of the specific color is extracted and the area shape evaluation condition changes from round to rectangular, triangular or other shape.

It is also possible to get the edge component from the image and to extract all similar external patterns. The edge component in this case can be obtained from the decomposed image on the specified level in the aforementioned multiple resolution transform, or can be extracted by a general Laplacian filter.

The pattern size herein presented can be expressed in terms of the number of pixels. In the illustrated example, if there is the size of a face "Intermediate", the feature extraction level preferable to each of A, B and C can be determined.

When the original image size (i. e., pattern size and image resolution) is very large, resolution transform is carried out until the image size corresponding to the aforementioned size "Intermediate" is reached, and the pattern is extracted, thereby substantially reducing the amount of required computation.

The resolution transform to be carried out in the preprocessing step can be performed in a simple manner according to the maximum neighborhood method and linear interpolation method, which are the techniques known in the prior art.

Tokkai 2000-188689 and 2002-262094 disclose details of the methods for enlargement and reduction. These methods can be used.

For the image processing apparatus having a processing sequence where the image scan area or the scanned frame is determined by prescanning as in the case of a film scanner and flat bed scanner, it is also possible to make such arrangements that the aforementioned temporary pattern extraction and patter size evaluation are carried out in the phase of prescanning, and scanning is performed at the image resolution suitable for pattern extraction.

The aforementioned arrangement provides a sufficient resolution even when the extracted pattern is small, and allows the scanning time to be reduced by setting the resolution of this scanning to a sufficient value if it is large.

Needless to say, similar processing can be applied, for example, to the often utilized where the image is stored in the format composed and recorded at multiple resolutions. For example, the temporary pattern extraction can be carried out using a thumb nail image or the corresponding image having a smaller size, and actual pattern extraction can be carried out by reading the information stored on the level closest to the required image resolution. This arrangement allows the minimum amount of image to be called from the recording medium at a high speed.

The following gives some examples to describe the methods for searching all the subject patterns that can be extracted. As described above, the subject pattern to be extracted is switched in response to the scene attribute to be determined. Examples are as follows:

(Example) Scene attribute → Subject pattern to be extracted (Higher priority is assigned to the left one)

School excursion, Kyoto → Face, a person in a uniform, historic building

After-wedding celebration → Bride, bridegroom, face, dress, spotlight

In some cases, patterns are overlapped with one another, such as the bride, bridegroom, face spotlight and dress, as described above.

The aforementioned subject pattern can be specified in advance. A new pattern can be created by the following method, for example, as shown in Figs. 14 and 15.

An image is displayed on the monitor, and the major image portion is specified. The contour area including the specified portion is automatically extracted. The obtained pattern will be called a unit pattern for temporary purposes.

When all the required patterns are not included, the above step is repeated to connect very small contours. When all the contours have been extracted, registration is specified. (A REGISTER key is pressed).

Registered information includes information on the selected area (the number of the unit patters, their type and the method of their combination in the set, and various characteristic values on all the areas), the name of the area (a student in a uniform, etc.) and information on priority.

It is also possible specify, as the aforementioned unit pattern, a rather complicated configuration corresponding to the aforementioned subject pattern such as a "face" and "uniform". Their combination makes it easy to register the subject pattern of a higher level such as a "student".

An example of the subject pattern registered in this manner will be described with reference to Figs. 14 and 15. As shown in Fig. 14, the category "Student" is further classified into two subcategories; (a) male student and (b) female student". Each of them contains inherent elements <1>, <2> and <3> as well as <1>, <4> and <5>. The "student" is defined by their combination as unit patterns.

This can be expressed by the following logical form:

"Student" = (<1> and <2> and <3>) or (<1> and <4> and <5>) .

Each of constituent elements <1> through <5> is defined when individual unit patterns are combined.

one example:

the coat of the female student;
as shown in Fig. 15;
as illustrated.

Each of the constituent elements in Fig. 15 (a) is further composed of:

unit patterns "a" through "f";
Fig. 15 (b) representing this state of combination.

General condition of the photographic print in a photo shop:

simultaneous printing from a roll film;
the image storage media used when the photograph is taken by a digital camera;
related multiple frames.

Order is placed for printing collectively (hereinafter referred to as "a series of orders").
In a series of orders multiple images one representative image the aforementioned extraction and registration a group of images based on this information pattern extraction for all images, thereby reducing the number of pattern registrations effective work.
When the aforementioned registered pattern is inherent to the individual customer, the pattern having been registered is stored together with the customer information. A required registered pattern is searched from the customer information when the next printing has been ordered. If this arrangement has been made, time and effort will be saved and high-quality services can be provided.
As described above, when a series of order processing is to be made, various conceivable subject patterns are extracted from all the screens, and the scene attribute and priority can be estimated from the results of statistic processing of the frequency of their appearance and their position in the screen.
The aforementioned arrangement allows the subject most valuable to the customer to be estimated even if the information on the scene attribute cannot be obtained from the customer. This makes it easy to get a print preferable to the customer at a higher accuracy.
Then a high priority is assigned to the subject extracted from the aforementioned processing. This is assigned based on the information on the priority determined in response to the scene attribute. Further, a greater weight can be assigned to the priority information according to the size (more weight on larger size, etc.) and position (more weight on the item at the central portion) of the subject pattern. This provides more favorable information on the weight of the subject pattern. "Importance" is attached to the information on priority obtained in this manner.
The following arrangement is also possible: The subject patterns to be extracted, GPS signal as a method of determining the priority information for such subject patterns, time of the day, map, geographical information, information searched by the automatic search engine such as the Internet, the information of the relevant municipality, tourist association and the Chamber of Commerce and Industry, and information formed by linking such information are used in such a way that the generally important subject pattern and landmark in an image captured position is ranked as information of higher priority.
Image processing is performed in such a way that greater importance is attached to the subject pattern of higher priority. To give an example, the following describes the method of image processing wherein gradation transform conditions are determined so that the subject pattern of higher priority is finished to have a more preferable gradation:
The following is an example of gradation compensation for brightness. In the example of the aforementioned school excursion in Kyoto represented in Fig. 16, the priority information is assigned as follows:

<1> A person in uniform: priority 1, weighting factor 5
<2> Historic building (Japanese style): priority 2, weighting factor 2
<3> Face: priority 3, weighting factor 1

Assume that all elements have been found out from the actual image. However, <3> is included in <1> (<1> as an element to be extracted) and both are slightly too small. <2> of a large size is located at the center. In the sub-priority information, the weight corresponding to the size is assumed as given below:

a: Subject "large": weighing factor 1.0
b: Subject "intermediate": weighing factor 0.8
c: Subject "smaller": weighing factor 0.3
d: Subject "small": weighing factor 0.1

Then the weights of <1> and <2> are:

<1> $5 \times 0.3 = 1.5$
<2> $2 \times 1 = 2.0$

This image is considered as a commemorative photo taken in front of a historic building. The aforementioned processing provides a people photograph with a greater weight placed on the building (an object of sight-seeing).
The following describes the gradation compensation according to the aforementioned weight for the image of Fig. 16, with reference to Figs. 17 and 18:
In the aforementioned example, assume that $\alpha$ denotes the amount of gradation compensation that allows <1> to have the most preferable finish, and β indicates the amount of gradation compensation that allows <2> to have the most preferable finish. Then the amount of gradation compensation γ with consideration given to the weight is given by the following equation:

$$\gamma = (1.5 \times \alpha + 2.0 \times \beta)/(1.5 + 2.0)$$

It should be noted that "1.5" and "2.0" in the aforementioned equation (also applicable to the equation to be described later) are the values of weight obtained as an example of the weight calculation in <1> and <2>. They are handled as variables in general image processing.

Another example is related to the dodging method where the overall gradation transform is provided in such a way that the subject pattern of higher priority is finished to have the best gradation and, for other subject patterns, the gradation for their areas alone is changed on an selective basis.

Addition of the processing of dodging allows the brightness of each of the subject elements <1> through <3> to be compensated to have the appropriate state.

To explain with reference to the aforementioned equations, the amount of overall gradation compensation is assigned with "β" that allows <2> to have the most preferable finish. For <1>, only the relevant area is subjected to gradation processing corresponding to (α - β).

When one sheet of image contains multiple subjects, the natural feeling of the image will be lost if compensation is made separately. To put it another way, if the amount of gradation compensation in the aforementioned equation (α - β) is excessive, then the balance of a photo may be lost.

Assume that the upper limit of the compensation capable of ensuring natural gradation compensation is $\delta\{\delta < (\alpha - \beta), \delta > 0\}$, the overall natural result of compensation can be obtained if gradation compensation is made as shown below:

$$\varepsilon = (\alpha - \beta) - \delta$$

The amount of gradation compensation in <2> is expressed by $\beta + \varepsilon \times 1.5/(1.5 + 2.0)$.

The amount of gradation compensation in <1> is represented by $\varepsilon \times 1.5/(1.5 + 2.0) + \delta$ (for processing of dodging)

As described above, it is possible to use the technique that determines the order of priority (weighting information) and assigns appropriate brightness to the item having a greater weight and balanced brightness to other constituent elements.

The limit δ for allowing natural processing of dodging varies according to how this processing is carried out, especially in the area in the vicinity of the pattern boundary. An example will be used to explain the way of applying this processing effectively.

Fig. 19 is a block diagram representing the outline of an embodiment. The original image shows an object in the room where a window having a form of hanging bell is open. For simplicity, the subject in the room is represented as a star.

In the picture, when sunlight is coming into the room from the right in a slanting direction, the image inside the window frame including the star-shaped subject contains a shadow on the right, and looks awkward. Assume that the portion with shadow is area A, while the other portion inside the window frame is area B. The object of the present embodiment is to reproduce the area A in a bright color by dodging.

The image is subjected to multiple resolution transform. Resolution can be transformed by a commonly known method. Here the aforementioned wavelet transform, especially the Dyadic Wavelet, will be used as a preferred example.

This transform will create decomposed images sequentially from low to high levels, and residual low frequency image <1> is created. Turning attention to the area A, the right side of the area (edge of the window frame) can be clearly identified from the low-level resolution image. The left side of the area (the window frame edge indicates the contour of the shadow protected in the room) is not identified from the low-level resolution image. It can be clearly identified from the high-level resolution image. Here the contour of the shadow is not clear, as compared with the window frame edge. It can be evaluated as blurred and ill defined.

The next step is to apply masking to the area A. This is the step of returning the decomposed image back to the original image by inverse transform. The mask image <1> is added to the low frequency image <1>. (The term "added" is used for the sake of expediency. It means subtraction if the black is defined as "0", and the white as a greater positive value". This definition is valid for the rest of this Specification). Processing of inverse transform is performed to cause synthesis between this and high-level resolution image, thereby getting a lower level, low frequency image <2>. Then a mask image <2> is added to this, and a converted image is gained by the processing similar to the aforementioned one.

The aforementioned mask image <1> covers the left half of the area A, while the mask image <2> covers the right half of the area A. The mask image added in the step of inverse transform, as shown in Figs. 9 and 10 is blurred since it passes through a low-pass filter. The mask image <1> is subjected to more frequent and stronger processing of low-pass filter. This provides the processing of masking where the amount of masking processing in the vicinity of the boundary between areas A and B undergoes a more gradual change. Thus, it is possible to apply processing of dodging favorably conforming to the profile of the shadow that exhibits a gradual change. For the similar reason, the mask image <2> acts as a mask characterized by a smaller amount of blur. This allows processing of dodging suitable to window frame edge.

Processing of masking is subjected to inverse transform on the resolution level where the characteristics of the boundary of the areas have appeared in the most markedly manner. It is also possible to provide processing of marking on the level that has shifted a predetermined distance from the resolution level where the aforementioned characteristics of the area boundaries are exhibited most markedly, based on the characteristics of the image and the result of trial. This allows image processing to be tuned in a manner preferable in subjective terms.

Masks are created as follows:

For the masks for gradation, color tone and color saturation compensation, the area is split in advance. For example, they are created and used, as shown in Fig. 20. The area is split according to the following two methods, without being restricted thereto:

(1) With reference to the example of Fig. 17 (a), the subject pattern <1> (person) and subject pattern <2> (temple and shrine) are cut put based on the result of subject pattern extraction, and is formed into masks. The representative value (average value in most cases) of each mask is obtained. The difference from the represented gradation suitable to each subject corresponds to the amount of gradation correction. If there is a great difference between the person and temple/shrine (as in the present example), the entire area must be compensated. In this case, the amounts of compensation $\alpha$, $\beta$ and $\gamma$ can be calculated for the three areas "person", "temple/shrine" and "others". If some amount of compensation $\omega$ is assumed for the entire screen, the amount of each mask compensation can be given as follows:

"Person" $\alpha - \omega$
"Temple/shrine" $\beta - \omega$
"Other" $\gamma - \omega$

These values are assigned to the relevant areas, and the amount of compensation "0" to other areas. They are each used as masks. For example, when all masks are caused to act on the same level, three masks are synthesized and are added to the low-frequency image on a predetermined level.

(2) For example, the shadow is deep even in the same subject pattern and gradation reproduction cannot be achieved in some cases. In such cases, the histogram of the image signal value is created from the entire screen and the brightness of the subject is decomposed into several blocks using a two-gradation technique and others. A compensation value is assigned to the pixel pertaining to each, similarly to the case (1), thereby creating a mask. This mask does not lead to a clear-cut area division due to the image signal, and numerous very small areas may be created due to noise. However, they can be simplified by a noise filter (or smoothing filter). A method for splitting the histogram and giving different amounts of compensation is disclosed in details in the Tokkaihei 1999-284860. The boundary of the areas is determined from the result of this calculation and the characteristics of the boundary are evaluated by the method of multiple resolution transform, thereby determining the level where the mask works. The difference from (1) is that there is a division of the area apart from the pattern split. In actual dodging, one subject is often separated between light and shadow. In this state, (2) is more effective.

For sharpness and granularity, the compensation value described on the mask serves as an intensity parameter for an edge enhancement filter or noise filter. Unlike the case of correcting the gradation, color tone and color saturation in the stage of providing this mask, the object becomes the image not subjected to multiple resolution transform or the decomposed image on the specific resolution level. The mask creating method itself is the same as that for compensation of gradation, color tone and color saturation, but a blurring filter must be applied to the mask itself before the mask is made to work. In the case of correcting the gradation, color tone and color saturation, the mask is applied to the low-frequency image. This is because, even if the contour of the mask is clearly defined, the image passes through an appropriate low-pass filter in the subsequent step of inverse transform, and the contour is blurred in a natural manner. However, this effect cannot be gained in the sharpness and granularity processing sequence. To determine the degree of blurring of the blurring filter, evaluation is made in the same manner as that in the aforementioned (2). Actually the proper filter is the one that provides the amount of blurring to which the aforementioned mask image of (2) will be exposed.

Figs. 20 through 22 show another example of the mask form that can be used in the aforementioned manner.

Fig. 20 shows the portion of the mask in Fig. 19. The aforementioned area is divided into two subareas <1> and <2>. Here a larger numeral in circle corresponds to the mask with a clearer edge. An area boundary indicated by a dotted line is present between subareas <1> and <2>. Here the mask sandwiching the area and having a smaller numeral can be split into two by this area boundary. The mask having a larger numeral has a characteristic of change such that gradual change occurs in the amount of masking on the area boundary, or preferably, that it has the characteristic conforming to the characteristics of the low-pass filter applied in the step of inverse transform until the counterpart mask across the boundary is synthesized with this mask. This arrangement will provide the effect of improving smooth continuation of area boundaries.

Fig. 21 gives an example showing that mask processing on the separate resolution level is applied to individual subject patterns; <1> cloud <2> leaf and tree top and <3> person and tree trunk.

Fig. 22 schematically shows that light is coming onto a cylinder with the upper side edge rounded, from the right in the slanting direction (in almost horizontal direction).

The above has described the technique of determining the overall compensation level and partial masking (dodging) technique. The above two examples can be used in combination or can be switched for use in conformity to a particular scene.

In the above description, gradation and brightness were used to give examples. It is also possible to use them for setting various conditions for representation of color and color saturation. For example, there are differences in the desirable processing as given below, for each of <1> and <2> shown in Fig. 16. They can be subjected to the aforementioned average processing, individual processing for each of separate areas or a combination of these two types of processing.

| Item | Desirable processing for <1> | Desirable processing for <2> |
|---|---|---|
| Color tone reproduction | As nearer to the memorized color as possible | As nearer to the real object as possible |
| Color saturation reproduction | Natural reproduction | Emphasizing the color intensity |

As for setting of the conditions for processing sharpness and granularity, the entire image can be subjected to image processing based on the average weighting in conformity to the priority information of multiple subject patterns, thereby getting the result of image processing meeting the customer requirements. Further, when the method to be described later is used, it is possible to apply individual processing for each of separate areas or processing in combination of such types of processing.

For sharpness and granularity, there are differences in the desirable processing as given below, for each of <1> and <2> shown in Fig. 16:

| Item | Desirable processing for <1> | Desirable processing for <2> |
|---|---|---|
| Sharpness | Softer resolution power | Frequency is lower than <1>, Giving importance to the contrast |
| Granularity | Suppressing as smaller as possible | Giving importance to the sense of detail and focusing |

Fig. 23 shows an example of area split with respect to sharpness (enhancement processing) and granularity (removal of granular form).

Let us assume, for example, that the area is divided into three portions; "C: cloud"", B: blue sky" and "A: mountain with trees". As illustrated, desired combinations of sharpness and granularity are different for each of the A, B and C. The relationship of boundary areas is formed in such a way that a clear contour between A and B, and a blurred contour between B and C. It is apparent that the characteristics of the area boundary can be identified easily by evaluating the image on each resolution level.

In the example of sharpness proceeding, a mask is created where the sharpness enhancement coefficients are arranged in a corresponding form in the screen position (same as the mask given in the example of Fig. 19). The level of resolution conforming to each of the areas A through C is obtained by the method described in the aforementioned Fig. 19. A compensated mask is obtained by blurring each mask to the degree corresponding to the suitable level of resolution, thereby synthesizing a total of three compensated masks for areas A through C.

If the amount of compensation of a certain pixel is determined in the position corresponding to the mask in conformity to the information on the amount of compensation described on the synthesized mask, then sharpness enhancement is carried out in conformity to the characteristics of each of the areas A, B and C. It is further possible to get the most preferable state where there is a clear change in the amount of compensation of sharpness enhancement on the area boundary between A and B and a gradual change in the amount of compensation of sharpness enhancement on the area boundary between B and C.

In the case of the image information having multiple color dimensions as in the case of a color image, color coordinate conversion can be performed as required, and processing described so far can be applied to the required coordinate axis alone.

For example, in the case of the image represented by three colors R, G and B, brightness particularly important for compensation of brightness is converted once into the brightness and chrominance (Lab, etc.), and processing is applied to the brightness information alone, thereby minimizing the reduction in image processing quality and the amount of image processing substantially.

In the case of an area such as flower, sea and sky where the area is to be divided and the subject has an inherent color tone, processing for determining the area boundary and/or processing for evaluating the characteristics of area boundary can be applied in the color coordinate where inherent color tone can be most easily extracted. Actual image processing for each area can be applied to a different coordinate, for example, brightness and color saturation coordinates. It is possible to provide performance tuning specialized for a particular and special image such as "a certain flow (e.g. deep red rose).

Flowcharts in Figs. 24 through 27 show the step of carrying out an image processing method of the present invention and running the program for functioning the image processing means of an image processing apparatus of the present invention.

Fig. 24 shows the basic step.

Image information is obtained (Step 1) and scene attribute information is obtained (Step 2).

Then the subject pattern to be extracted is determined from the scene attribute information (Step 3), and constituent elements characteristic of each subject pattern are determined (Step 4).

Further, a preferred resolution level is set for each of the constituent elements (Step 5), and image information is subjected to multiple resolution transform (Step 6).

Each of the constituent elements is extracted on each preferable resolution level (Step 7), and the subject pattern is extracted based on the extracted constituent elements (Step 8).

Lastly, gradation and sharpness adjustment and various other images processing including image cutout are performed in response to the extracted subject pattern (Step 9), thereby completing the processing.

Fig. 25 shows an example preferable for setting the preferable resolution level suited for extraction of constituent elements characteristic of the subject pattern, in response to the information on subject pattern size.

Steps up to Step 4 that determines the constituent elements characteristic of the subject pattern are the same as those of the example given in Fig. 24. After that, information on the subject pattern size is obtained (Step 201) and the preferable resolution level suited for extraction of the constituent elements set based on the information on subject pattern size is set for each of the constituent elements (Step 6). The subsequent processing is the same as that of Fig. 24.

Fig. 26 shows another example suited for applying the resolution transform processing of the original image in response to the information on the subject pattern size and extracting the constituent elements characteristic of the subject pattern.

Constituent elements characteristic of each subject pattern are determined (Step 4). Further, steps up to step 5 where each of the constituent elements is extracted and the preferable resolution level is set are the same as those of Fig. 24.

After that, the information on the subject pattern size is obtained (Step 301), and the image size or resolution is converted in such a way that the size of the subject pattern will be suitable for pattern extraction (Step 302).

The image subjected to image size conversion undergoes multiple resolution transform (Step 6), and subsequent processing is the same as that of the aforementioned two examples.

Fig. 27 shows a further preferable example, where the information on the subject pattern size is obtained based on the prescanning information, and the image is captured at the image resolution suited for extraction of subject pattern based on the obtained result.

The perscanning image information is first obtained (Step 401), and scene attribute information is then obtained (Step 2).

Then the subject pattern to be extracted is determined from the obtained scene attribute information (Step 3), and the constituent elements characteristic of each subject pattern are determined (Step 4). Further, the preferable resolution level used for extraction is set for each of constituent elements. Here for the subject pattern, a temporary subject pattern is extracted (Step 402), and the information on the subject pattern size is obtained (Step 403).

The scan resolution in this scan mode is set so that the subject pattern size obtained in Step 403 will be a preferable image size (Step 404). This scanning is performed to get the image information (Step 405). Then image information obtained by this scanning is subjected to multiple resolution transform (Step 6).

As described above, the subject pattern extraction method used in the present embodiment is high a subject pattern extraction capacity. Various types of processing can be applied to the subject pattern itself obtained in this manner. The intended subject pattern can be processed with a high accuracy.

The following describes an example of the case of extracting face information from the input image information, and processing the constituents of the face. In particular, it refers to the method of correcting the defect of what is commonly known as "red eye", where eyes on the photo appears bright and red when photographed in a stroboscopic mode in a dark room.

First, the face is extracted from the image in the form of multiple face constituents, according to the aforementioned method. Then the area corresponding to the portion of "pupil" is extracted. Further, multiple constituents are present around the pupil according to the method of the present invention. For example, what is commonly called "the white of an eye" is present on both sides of the pupil, and the portions corresponding to the corners of the eyelid and eye are found outside. Further, eyebrows, bridge of the nose and "swelling of the cheek" are located adjacent to them. The contour of the face is found on the outermost portion. In the present invention, as described above, these multiple constituents of the face are detected in the form of decomposed images on the respective preferable resolution levels. Further, the face pattern can be identified when these constituents are combined, thereby allowing reliable extraction of the pupil area. Furthermore, the face area is temporarily extracted to get the information on the size and the image of the corresponding resolution. Then the aforementioned extraction is carried out. This procedure ensures stable performance of face area extraction, independently of the size of the face present in the image.

From the face area extracted in this manner, the portion corresponding to the pupil is extracted and processed. In this case, the signal intensity corresponding to the pupil area boundary is evaluated on each resolution level of the image subjected to multiple resolution transform, whereby the characteristics of the boundary area are evaluated. This allows simple evaluation to be made of whether or not there is a clear contour of the pupil and whether or not the contour is blurred and undefined. Based on the result of evaluating the red eye area contour, compensation is carried out for the color tone and gradation for which the area is divided, as described above. This procedure minimizes the impact of the pupil in the original image upon the description of the contour and allows compensation to be made for the gradation of the pupil portion. This arrangement provides excellent characteristics of getting natural compensation results.

The following describes the most basic process of executing the aforementioned red eye compensation procedure with reference to the flowchart of Fig. 28.

First, image information is obtained (Step 501). In this example, the subject pattern corresponds to the human face. The constituent elements characteristic of the human face including the pupil are determined (Step 502). Then the preferable resolution level is set for each of the constituent elements (Step 503), and the multiple resolution transform of image information is processed (Step 504).

The constituent elements are extracted on the preferable resolution level (Step 505). Based on the extracted constituent elements, the human face is extracted (Step 506).

Gradation information is obtained regarding the area corresponding to the pupil in the extracted face area and evaluation is made to see whether or not the "red eye" appears (Step 507). In the evaluation of this step, this is compared with the gradation information on the specific constituent elements of the face pattern, for example, the area corresponding to the white of an eye, lip and cheek. If the pupil gradation is brighter than the specified reference, presence of "red eye" is determined.

In addition to this method, there are many other methods.

If presence of "red eye" has been determined, the characteristics of the contour are evaluated by comparison of the signal intensities on the portion corresponding to the boundary of the red eye area in multiple decomposed images obtained from the aforementioned multiple resolution transform (Step 508).

Finally, based on the result of contour evaluation, the gradation of the contour area of the input image information is adjusted (Step 509).

Next, referring to the flowcharts shown in Figs. 24, 25, 29 and 30, the program steps for executing the image-processing method, embodied in the present invention to attain the other object of the present invention, will be detailed in the following.

Fig. 24 shows the basic step.

Firstly, input image information is obtained (Step 1), and the scene attribute information is obtained (Step 2).

The subject pattern to be extracted is determined from the obtained scene attribute (Step 3), and constituent elements characteristic of each subject pattern are determined (Step 4).

Further, the preferable resolution level used for extraction is set for ach of constituent elements (Step 5), and the multiple resolution transform of image information is processed (Step 6).

Each constituent element is extracted on each preferable resolution level (Step 7). Based on the extracted constituent elements, the subject pattern is extracted (Step 8).

Lastly, in response to the extracted subject pattern and the result of evaluating the characteristics of the subject pattern boundary area, processing similar to dodging is applied, with respect to gradation and sharpness, to the entire image or the area in which compensation method is different for each area. Then image cutout and various other processing are performed (Step 9). Processing is now complete.

Fig. 25 shows a preferred embodiment for setting the preferable resolution level suited for extraction of the constituent elements characteristic of the subject pattern, in response to the information on the subject pattern size.

Steps up to Step 4 that determines the constituent elements characteristic of the subject pattern are the same as those of the example given in Fig. 24. After that, information on the subject pattern size is obtained (Step 201) and the preferable resolution level suited for extraction of the constituent elements set based on the information on subject pattern size is set for each of the constituent elements (Step 6). The subsequent processing is the same as that of Fig. 24.

Fig. 29 shows another example where part of gradation compensation is carried out by dodging.

Firstly, input image information is obtained (Step 1), and check is made to see whether or not the scene attribute information or similar information is contained in the film or media (Step 102). In some case ("Yes" in Step 102), the obtained information is stored in the information storage section (Step 303). In the meantime, an image is displayed on the image display section and the scene attribute is also gained from the customer. It is stored in the information recording section (Step 304).

Based on this information, the scene attribute is determined (Step 305), and the subject pattern to be extracted is determined (Step 306).

The predetermined subject pattern is extracted by the method using multiple resolution transform (Step 307), and priority information is attached to it using a weighting factor or the like (Step 308). Then priority is corrected according to the position and size of the extracted subject pattern (Step 309).

Further, the amount of gradation compensation corresponding to each extracted subject pattern is determined based on various types of information stored in the information storage section, for example, the information on preferable gradation and color tone representing (Step 310).

Then the amount of gradation compensation of each subject pattern is divided into the dodged components and remaining components (Step 311). Masking is applied using the dodging technique described in the present Patent Application based on multiple resolution transform (Step 312). The weighting factor of each subject pattern obtained in (Step 309) is used to calculate the average weighting value of the remaining components in the amount of pattern gradation compensation obtained in Step 311 (Step 313). The compensation for gradation in the amount corresponding to the average weighting value is applied to the image (Step 314). Processing is now complete.

Fig. 30 shows a further example of compensation for the sharpness in dodging applied to enhancement processing.

Input image information is obtained and the scene attribute information is obtained. The subject pattern to be extracted is determined and the predetermined subject pattern is extracted. Up to this steps (from step 1 to step 307) are the same as those of the previous example.

In response to each extracted subject pattern, a preferable sharpness enhancement coefficient is set (Step 408).

Further, a mask is created where the set sharpness enhancement coefficient is arranged in two-dimensional array in the area containing each subject pattern (Step 409). The characteristics of the boundary area of each of the subject pattern are evaluated by comparing the signal intensities appearing on the decomposed image according to the Dyadic Wavelet (Step 410).

The mask created in Step 409 is subjected to the processing of blurring, based on the result of evaluation in Step 410 (Step 411), thereby synthesizing the mask for each created subject pattern (Step 412).

The amount of sharpness compensation corresponding to each pixel position created on the mask is applied to each corresponding pixel, and image processing is performed (Step 413). Processing is now complete.

As described in the foregoing, according to the present invention, the following effects can be attained.

(1) Identification of the pattern when extracting the subject pattern is carried out on the optimum resolution level in conformity to the constituent elements of the subject pattern. This arrangement ensures high-accuracy extraction.

(2) The optimum level can be set in conformity to characteristics such as the degree of subject pattern complexity and clearness of the contour. This provides more reliable extraction of the subject pattern.

(3) The constituent element detection level can be changed in conformity to the size of the subject pattern. This provides more preferable extraction.

(4) The position specifying accuracy is not deteriorated despite switching of the resolution level. Accordingly, high-accuracy extraction can be performed by relatively simple processing.

(5) In the process of face extraction, for example, hair and pupil are extracted using a brightness coordinate or green coordinate and the lip is extracted using a hue coordinate or blue coordinate. In this way, the subject pattern extraction is characterized by minimum noise and advanced detection capacity.
(6) Extraction can be started after an image has been converted into the one having the size suited for subject pattern extraction. Further, pattern identification can be performed on the optimum resolution level in conformity to the constituent elements, thereby ensuring high-accuracy and high-speed extraction.
(7) Image information can be obtained with a sufficient resolution, despite the small size of the subject pattern to be extracted. This provides a preferred extraction result even if the subject pattern is small.
(8) The intended subject pattern can be extracted with high accuracy from patterns having a similar shape. Further, constituent elements are extracted with high accuracy, thereby permitting simple and reliable compensation for "red eyes", facial expressions, etc.
(9) Image processing can be performed on the image resolution level suited to the size of the subject pattern, with the result that correct extraction of the constituent elements is ensured, independently of the size of the subject pattern in an image.
(10) When the amount of image compensation different for each area of the image is applied, it is possible to minimize the unnatural feeling in the result of compensation that occurs on the area boundary and to reproduce the main subject with the optimum image characteristics, thereby getting an image characterized by balanced image properties
(11) Reliable evaluation of the characteristics of the area boundary provides high-accuracy area division in conformity to the boundary properties.
(12) Easy switching of the amount of the mask blur is realized by switching of the level for masking, and this ensures simple processing in conformity to the result of area boundary evaluation.
(13) The boundary area position can be specified with a high degree of reliability and high precision. This provides high-precision image processing and enables preferable compensation for sharpness and granularity in each step of the Dyadic Wavelet.
(14) Characteristic evaluation and image compensation can be performed in the color coordinate suited to each of them, and this ensures high-precision and high-speed image processing.

Disclosed embodiment can be varied by a skilled person without departing from the spirit and scope of the invention.

## Claims

**1.** An image-processing method, comprising the steps of:

acquiring input image information from an image by means of one of various kinds of image inputting devices;
setting a subject pattern including one or more constituent elements from said input image information;
applying a multi-resolution conversion processing to said input image information;
detecting said constituent elements by employing a decomposed image of a suitable resolution level determined with respect to each of said constituent elements; and
extracting said subject pattern from said input image information, based on said constituent elements detected in said detecting step.

**2.** The image-processing method of claim 1,
wherein said suitable resolution level is individually determined corresponding to said subject pattern.

**3.** The image-processing method of claim 1,
wherein said suitable resolution level is individually determined corresponding to size information of said subject pattern residing in said input image information.

**4.** The image-processing method of claim 1,
wherein said multi-resolution conversion processing is a Dyadic Wavelet transform.

**5.** The image-processing method of claim 1,
wherein said input image information represents a color image, and said constituent elements of said subject pattern are extracted from said input image information by employing a signal value corresponding to a specific color coordinate within a color space, which is determined corresponding to said constituent elements.

**6.** An image-processing method, comprising the steps of:

acquiring input image information from an image by means of one of various kinds of image inputting devices;
setting a subject pattern including one or more constituent elements from said input image information;
acquiring size information of said subject pattern residing in said input image information;
converting a resolution of said input image information, based on said size information, so as to acquire resolution-converted image information of said image;
applying a multi-resolution conversion processing to said resolution-converted image information;
detecting said constituent elements by employing a decomposed image of a suitable resolution level determined with respect to each of said constituent elements; and
extracting said subject pattern from said resolution-converted image information, based on said constituent elements detected in said detecting step.

**7.** The image-processing method of claim 6,
wherein said suitable resolution level and a resolution of said resolution-converted image information are individually determined corresponding to said subject pattern.

**8.** The image-processing method of claim 6,
wherein said multi-resolution conversion processing is a Dyadic Wavelet transform.

**9.** The image-processing method of claim 6,
wherein said input image information represents a color image, and said constituent elements of said subject pattern are extracted from said resolution-converted image information by employing a signal value corresponding to a specific color coordinate within a color space, which is determined corresponding to said constituent elements.

**10.** An image-processing apparatus, comprising:

an image information acquiring section to acquire input image information from an image by means of one of various kinds of image inputting devices;
a setting section to set a subject pattern including one or more constituent elements from said input image information acquired by said image information acquiring section;
a multi-resolution conversion processing section to apply a multi-resolution conversion processing to said input image information;
a detecting section to detect said constituent elements by employing a decomposed image of a suitable resolution level determined with respect to each of said constituent elements; and
an extracting section to extract said subject pattern from said input image information, based on said constituent elements detected by said detecting section.

**11.** The image-processing apparatus of claim 10,
wherein said suitable resolution level is individually determined corresponding to said subject pattern.

**12.** The image-processing apparatus of claim 10,
wherein said suitable resolution level is individually determined corresponding to size information of said subject pattern residing in said input image information.

**13.** The image-processing apparatus of claim 10,
wherein said multi-resolution conversion processing is a Dyadic Wavelet transform.

**14.** The image-processing apparatus of claim 10,
wherein said input image information represents a color image, and said constituent elements of said subject pattern are extracted from said input image information by employing a signal value corresponding to a specific color coordinate within a color space, which is determined corresponding to said constituent elements.

**15.** An image-processing apparatus, comprising:

an image information acquiring section to acquire input image information from an image by means of one of various kinds of image inputting devices;
a setting section to set a subject pattern including one or more constituent elements from said input image information acquired by said image information acquiring section;
a size information acquiring section to acquire size information of said subject pattern residing in said input image information;
a resolution converting section to convert a resolution of said input image information, based on said size information acquired by said size information acquiring section, so as to acquire resolution-converted image information of said image;
a multi-resolution conversion processing section to apply a multi-resolution conversion processing to said resolution-converted image information;
a detecting section to detect said constituent elements by employing a decomposed image of a suitable resolution level determined with respect to each of said constituent elements; and
an extracting section to extract said subject pattern from said resolution-converted image information, based on said constituent elements detected by said detecting section.

**16.** The image-processing apparatus of claim 15,
wherein said suitable resolution level and a resolution of said resolution-converted image information are individually determined corresponding to said subject pattern.

**17.** The image-processing apparatus of claim 15,
wherein said multi-resolution conversion processing is a Dyadic Wavelet transform.

**18.** The image-processing apparatus of claim 15,
wherein said input image information represents a color image, and said constituent elements of said subject pattern are extracted from said resolution-converted image information by employing a signal value corresponding to a specific color coordinate within a color space, which is determined corresponding to said constituent elements.

**19.** A computer program for executing image-processing operations, comprising the functional steps of:

acquiring input image information from an image by means of one of various kinds of image inputting devices;
setting a subject pattern including one or more constituent elements from said input image information;
applying a multi-resolution conversion processing to said input image information;
detecting said constituent elements by employing a decomposed image of a suitable resolution level determined with respect to each of said constituent elements; and
extracting said subject pattern from said input image information, based on said constituent elements detected in said detecting step.

**20.** The computer program of claim 19,
wherein said suitable resolution level is individually determined corresponding to said subject pattern.

**21.** The computer program of claim 19,
wherein said suitable resolution level is individually determined corresponding to size information of said subject pattern residing in said input image information.

**22.** The computer program of claim 19,
wherein said multi-resolution conversion processing is a Dyadic Wavelet transform.

**23.** The computer program of claim 19,
wherein said input image information represents a color image, and said constituent elements of said subject pattern are extracted from said input image information by employing a signal value corresponding to a specific color coordinate within a color space, which is determined corresponding to said constituent elements.

**24.** A computer program for executing image-processing operations, comprising the functional steps of:

acquiring input image information from an image by means of one of various kinds of image inputting devices;
setting a subject pattern including one or more constituent elements from said input image information;
acquiring size information of said subject pattern residing in said input image information;
converting a resolution of said input image information, based on said size information, so as to acquire resolution-converted image information of said image;
applying a multi-resolution conversion processing to said resolution-converted image information;

detecting said constituent elements by employing a decomposed image of a suitable resolution level determined with respect to each of said constituent elements; and
extracting said subject pattern from said resolution-converted image information, based on said constituent elements detected in said detecting step.

**25.** The computer program of claim 24,
wherein said suitable resolution level and a resolution of said resolution-converted image information are individually determined corresponding to said subject pattern.

**26.** The computer program of claim 24,
wherein said multi-resolution conversion processing is a Dyadic Wavelet transform.

**27.** The image-processing program of claim 24,
wherein said input image information represents a color image, and said constituent elements of said subject pattern are extracted from said resolution-converted image information by employing a signal value corresponding to a specific color coordinate within a color space, which is determined corresponding to said constituent elements.

**28.** An image-processing method, comprising the steps of:

acquiring first image information at a predetermined first resolution from an image by means of one of various kinds of image inputting devices;
setting a subject pattern including one or more constituent elements from said first image information;
extracting information pertaining to said subject pattern from said first image information, in order to conduct an evaluation of said information;
establishing a second resolution based on a result of said evaluation conducted in said extracting step, so as to acquire second image information at said second resolution;
applying a multi-resolution conversion processing to said second image information;
detecting said constituent elements by employing a decomposed image of a suitable resolution level determined with respect to each of said constituent elements; and
extracting said subject pattern, based on said constituent elements detected in said detecting step.

**29.** An image-processing apparatus, comprising:

a first image-information acquiring section to acquire first image information at a predetermined first resolution from an image by means of one of various kinds of image inputting devices;
a setting section to set a subject pattern including one or more constituent elements from said first image information;
an information extracting section to extract information pertaining to said subject pattern from said first image information, in order to conduct an evaluation of said information;
a resolution establishing section to establish a second resolution based on a result of said evaluation conducted by said information extracting section, so as to acquire second image information at said second resolution;
a multi-resolution conversion processing section to apply a multi-resolution conversion processing to said second image information;
a detecting section to detect said constituent elements by employing a decomposed image of a suitable resolution level determined with respect to each of said constituent elements; and
an extracting section to extract said subject pattern, based on said constituent elements detected by said detecting section.

**30.** A computer program for executing image-processing operations, comprising the functional steps of:

acquiring first image information at a predetermined first resolution from an image by means of one of various kinds of image inputting devices;
setting a subject pattern including one or more constituent elements from said first image information;
extracting information pertaining to said subject pattern from said first image information, in order to conduct an evaluation of said information;
establishing a second resolution based on a result of said evaluation conducted in said extracting step, so as to acquire second image information at said second resolution;
applying a multi-resolution conversion processing to said second image information;

detecting said constituent elements by employing a decomposed image of a suitable resolution level determined with respect to each of said constituent elements; and
extracting said subject pattern, based on said constituent elements detected in said detecting step.

**31.** An image-processing method, comprising the steps of:

acquiring input image information from an image by means of one of various kinds of image inputting devices;
setting a subject pattern including one or more constituent elements from said input image information;
applying a multi-resolution conversion processing to said input image information, so as to acquire a decomposed image of a suitable resolution level determined with respect to each of said constituent elements;
conducting an operation for detecting said constituent elements by employing said decomposed image acquired in said applying step, so as to specify said subject pattern based on a situation of detecting said constituent elements; and
applying a predetermined image-processing to at least one of said constituent elements detected in said conducting step.

**32.** The image-processing method of claim 31, precedent to said step of acquiring said input image information, further comprising the steps of:

acquiring prior image information at a predetermined first resolution from said image;
setting said subject pattern from said prior image information;
extracting information pertaining to said subject pattern from said prior image information, in order to conduct an evaluation of said information; and
establishing a second resolution based on a result of said evaluation conducted in said extracting step, so as to acquire said input image information at said second resolution.

**33.** An image-processing apparatus, comprising:

an image information acquiring section to acquire input image information from an image by means of one of various kinds of image inputting devices;
a setting section to set a subject pattern including one or more constituent elements from said input image information;
a multi-resolution conversion processing section to apply a multi-resolution conversion processing to said input image information, so as to acquire a decomposed image of a suitable resolution level determined with respect to each of said constituent elements;
a detecting section to conduct an operation for detecting said constituent elements by employing said decomposed image acquired by said multi-resolution conversion processing section, so as to specify said subject pattern based on a situation of detecting said constituent elements; and
an image-processing section to apply a predetermined image-processing to at least one of said constituent elements detected by said detecting section.

**34.** The image-processing apparatus of claim 33,
wherein, precedent to acquiring said input image information, said image information acquiring section acquires prior image information at a predetermined first resolution from said image, and said setting section sets said subject pattern from said prior image information; and further comprising:

an information extracting section to extract information pertaining to said subject pattern from said prior image information, in order to conduct an evaluation of said information; and
a resolution establishing section to establish a second resolution based on a result of said evaluation conducted by said information extracting section, so as to acquire said input image information at said second resolution.

**35.** A computer program for executing image-processing operations, comprising the functional steps of:

acquiring input image information from an image by means of one of various kinds of image inputting devices;
setting a subject pattern including one or more constituent elements from said input image information;
applying a multi-resolution conversion processing to said input image information, so as to acquire a decomposed image of a suitable resolution level determined with respect to each of said constituent elements;
conducting an operation for detecting said constituent elements by employing said decomposed image acquired in said applying step, so as to specify said subject pattern based on a situation of detecting said constituent elements; and
applying a predetermined image-processing to at least one of said constituent elements detected in said conducting step.

**36.** The computer program of claim 35, precedent to said functional step of acquiring said input image information, further comprising the functional steps of:

acquiring prior image information at a predetermined first resolution from said image;
setting said subject pattern from said prior image information;
extracting information pertaining to said subject pattern from said prior image information, in order to conduct an evaluation of said information; and
establishing a second resolution based on a result of said evaluation conducted in said extracting step, so as to acquire said input image information at said second resolution.

**37.** A method for conducting an image-compensation processing, comprising the steps of:

acquiring input image information from an image;
dividing said input image information into a plurality of image areas;
determining a compensating amount of image characteristic value with respect to each of said plurality of image areas;
evaluating a boundary characteristic of each of boundaries between said plurality of image areas, so as to output an evaluation result of said boundary characteristic; and
determining a boundary-compensating amount with respect to each of boundary areas in the vicinity of said boundaries, based on said evaluation result of said boundary characteristic evaluated in said evaluating step.

**38.** The method of claim 37,
wherein said image-compensation processing includes at least one of a gradation compensation of image signal value, an image tone compensation for color image, a saturation compensation, a sharpness compensation and a granularity compensation.

**39.** The method of claim 37,
wherein said boundary characteristic of each of said boundaries is evaluated, based on a result of applying a multi-resolution conversion processing to said input image information acquired from said image.

**40.** The method of claim 37,
wherein said image-compensation processing includes at least one of a gradation compensation for image signal value, an image tone compensation for color image and a saturation compensation, and is applied to a low frequency band component, generated by applying a multi-resolution conversion processing to said input image information acquired from said image, at each level of its inverse-conversion operations.

**41.** The method of claim 39,
wherein said multi-resolution conversion processing is a Dyadic Wavelet transform.

**42.** The method of claim 37,
wherein said input image information, acquired from said image, represent a color image composed of a three-dimensional color space, and an operation of evaluating said boundary characteristic of each of said boundaries and/or said image-compensation processing are/is conducted, based on image information of at least one dimension on said three-dimensional color space, determined corresponding to contents of said image-compensation processing; and
wherein, with respect to said image-compensation processing, information of said dimension on said three-dimensional color space pertain to a brightness or a saturation of said color image, while, with respect to said operation of evaluating said boundary characteristic, information of said dimension on said three-dimensional color space pertain to a brightness, a saturation or a hue of said color image.

**43.** The method of claim 39,
wherein said image-compensation processing includes at least one of a sharpness compensation and a granularity compensation of image signal value; and

wherein said multi-resolution conversion processing is a Dyadic Wavelet transform.

**44.** The method of claim 43,

wherein said input image information, acquired from said image, represent a color image composed of a three-dimensional color space, and an operation of evaluating said boundary characteristic of each of said boundaries and/or said image-compensation processing are/is conducted, based on image information of at least one dimension on said three-dimensional color space, determined corresponding to contents of said image-compensation processing; and

wherein, with respect to said image-compensation processing, information of said dimension on said three-dimensional color space pertain to a brightness or a saturation of said color image, while, with respect to said operation of evaluating said boundary characteristic, information of said dimension on said three-dimensional color space pertain to a brightness of said color image.

**45.** An apparatus for conducting an image-compensation processing, comprising:

an acquiring section to acquire input image information from an image;
a dividing section to divide said input image information into a plurality of image areas;
a first determining section to determine a compensating amount of image characteristic value with respect to each of said plurality of image areas;
an evaluating section to evaluate a boundary characteristic of each of boundaries between said plurality of image areas, so as to output an evaluation result of said boundary characteristic; and
a second determining section to determine a boundary-compensating amount with respect to each of boundary areas in the vicinity of said boundaries, based on said evaluation result of said boundary characteristic evaluated by said evaluating section.

**46.** The apparatus of claim 45,

wherein said image-compensation processing includes at least one of a gradation compensation of image signal value, an image tone compensation for color image, a saturation compensation, a sharpness compensation and a granularity compensation.

**47.** The apparatus of claim 45,

wherein said evaluating section evaluates said boundary characteristic of each of said boundaries, based on a result of applying a multi-resolution conversion processing to said input image information acquired from said image.

**48.** The apparatus of claim 45,

wherein said image-compensation processing includes at least one of a gradation compensation for image signal value, an image tone compensation for color image and a saturation compensation, and is applied to a low frequency band component, generated by applying a multi-resolution conversion processing to said input image information acquired from said image, at each level of its inverse-conversion operations.

**49.** The apparatus of claim 47,

wherein said multi-resolution conversion processing is a Dyadic Wavelet transform.

**50.** The apparatus of claim 45,

wherein said input image information, acquired from said image, represent a color image composed of a three-dimensional color space, and an operation of evaluating said boundary characteristic of each of said boundaries and/or said image-compensation processing are/is conducted, based on image information of at least one dimension on said three-dimensional color space, determined corresponding to contents of said image-compensation processing; and

wherein, with respect to said image-compensation processing, information of said dimension on said three-dimensional color space pertain to a brightness or a saturation of said color image, while, with respect to said operation of evaluating said boundary characteristic, information of said dimension on said three-dimensional color space pertain to a brightness, a saturation or a hue of said color image.

**51.** The apparatus of claim 46,

wherein said image-compensation processing includes at least one of a sharpness compensation and a granularity compensation of image signal value; and

wherein said multi-resolution conversion processing is a Dyadic Wavelet transform.

**52.** The apparatus of claim 51,
wherein said input image information, acquired from said image, represent a color image composed of a three-dimensional color space, and an operation of evaluating said boundary characteristic of each of said boundaries and/or said image-compensation processing are/is conducted, based on image information of at least one dimension on said three-dimensional color space, determined corresponding to contents of said image-compensation processing; and
wherein, with respect to said image-compensation processing, information of said dimension on said three-dimensional color space pertain to a brightness or a saturation of said color image, while, with respect to said operation of evaluating said boundary characteristic, information of said dimension on said three-dimensional color space pertain to a brightness of said color image.

**53.** A computer program for executing an image-compensation processing, comprising the functional steps of:

acquiring input image information from an image;
dividing said input image information into a plurality of image areas;
determining a compensating amount of image characteristic value with respect to each of said plurality of image areas;
evaluating a boundary characteristic of each of boundaries between said plurality of image areas, so as to output an evaluation result of said boundary characteristic; and
determining a boundary-compensating amount with respect to each of boundary areas in the vicinity of said boundaries, based on said evaluation result of said boundary characteristic evaluated in said evaluating step.

**54.** The computer program of claim 53,
wherein said image-compensation processing includes at least one of a gradation compensation of image signal value, an image tone compensation for color image, a saturation compensation, a sharpness compensation and a granularity compensation.

**55.** The computer program of claim 53,
wherein said boundary characteristic of each of said boundaries is evaluated, based on a result of applying a multi-resolution conversion processing to said input image information acquired from said image.

**56.** The computer program of claim 53,
wherein said image-compensation processing includes at least one of a gradation compensation for image signal value, an image tone compensation for color image and a saturation compensation, and is applied to a low frequency band component, generated by applying a multi-resolution conversion processing to said input image information acquired from said image, at each level of its inverse-conversion operations.

**57.** The computer program of claim 55,
wherein said multi-resolution conversion processing is a Dyadic Wavelet transform.

**58.** The computer program of claim 53,
wherein said input image information, acquired from said image, represent a color image composed of a three-dimensional color space, and an operation of evaluating said boundary characteristic of each of said boundaries and/or said image-compensation processing are/is conducted, based on image information of at least one dimension on said three-dimensional color space, determined corresponding to contents of said image-compensation processing; and
wherein, with respect to said image-compensation processing, information of said dimension on said three-dimensional color space pertain to a brightness or a saturation of said color image, while, with respect to said operation of evaluating said boundary characteristic, information of said dimension on said three-dimensional color space pertain to a brightness, a saturation or a hue of said color image.

**59.** The computer program of claim 55,
wherein said image-compensation processing includes at least one of a sharpness compensation and a granularity compensation of image signal value; and
wherein said multi-resolution conversion processing is a Dyadic Wavelet transform.

**60.** The computer program of claim 59,

wherein said input image information, acquired from said image, represent a color image composed of a three-dimensional color space, and an operation of evaluating said boundary characteristic of each of said boundaries and/or said image-compensation processing are/is conducted, based on image information of at least one dimension on said three-dimensional color space, determined corresponding to contents of said image-compensation processing; and

wherein, with respect to said image-compensation processing, information of said dimension on said three-dimensional color space pertain to a brightness or a saturation of said color image, while, with respect to said operation of evaluating said boundary characteristic, information of said dimension on said three-dimensional color space pertain to a brightness of said color image.

FIG. 1

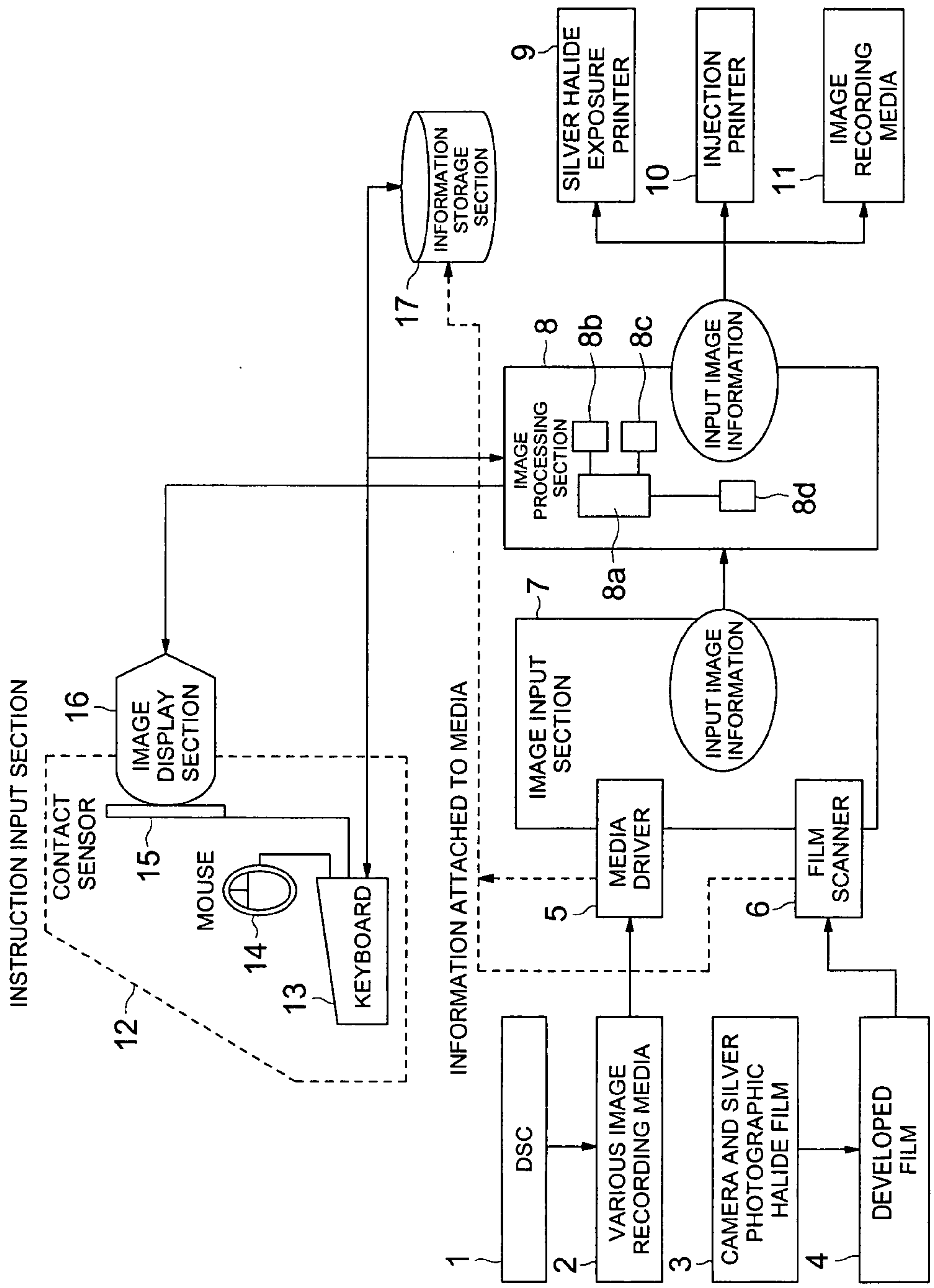
INSTRUCTION INPUT SECTION
12
CONTACT SENSOR
15
MOUSE
14
KEYBOARD
13
IMAGE DISPLAY SECTION
16
INFORMATION ATTACHED TO MEDIA
1
DSC
2
VARIOUS IMAGE RECORDING MEDIA
3
CAMERA AND SILVER PHOTOGRAPHIC HALIDE FILM
4
DEVELOPED FILM
5
MEDIA DRIVER
6
FILM SCANNER
7
IMAGE INPUT SECTION
INPUT IMAGE INFORMATION
8
IMAGE PROCESSING SECTION
8a
8b
8c
8d
INPUT IMAGE INFORMATION
17
INFORMATION STORAGE SECTION
9
SILVER HALIDE EXPOSURE PRINTER
10
INJECTION PRINTER
11
IMAGE RECORDING MEDIA

FIG. 2

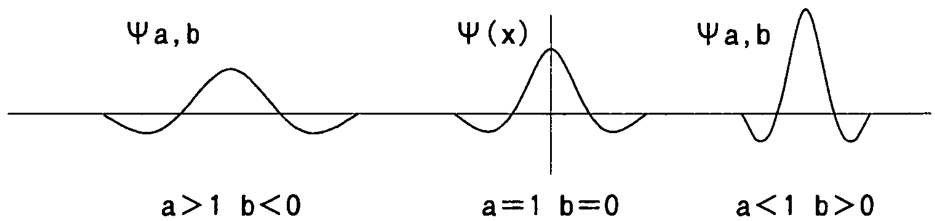


FIG. 3

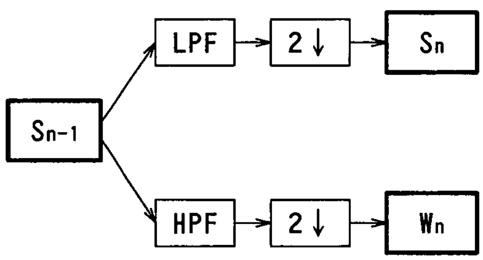


FIG. 4

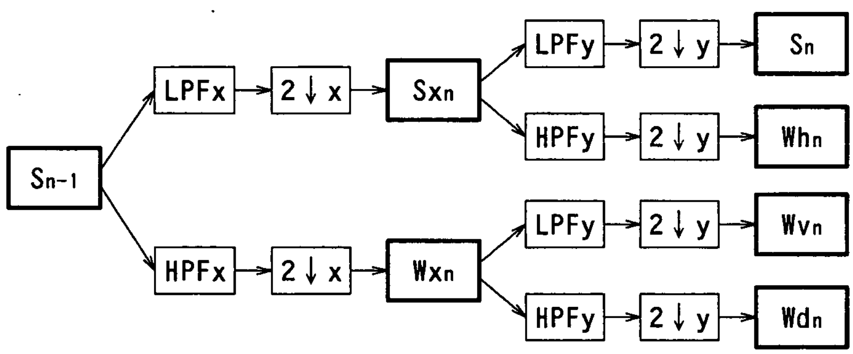

FIG. 5

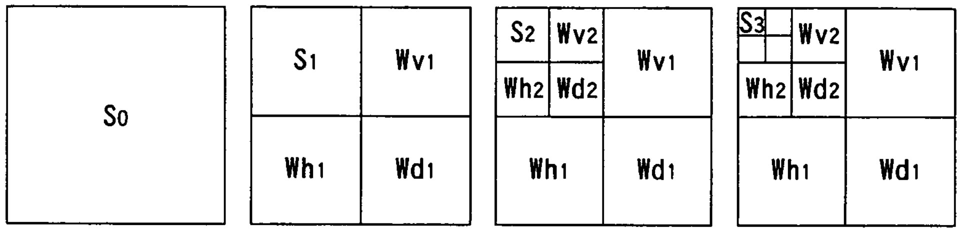


FIG. 6

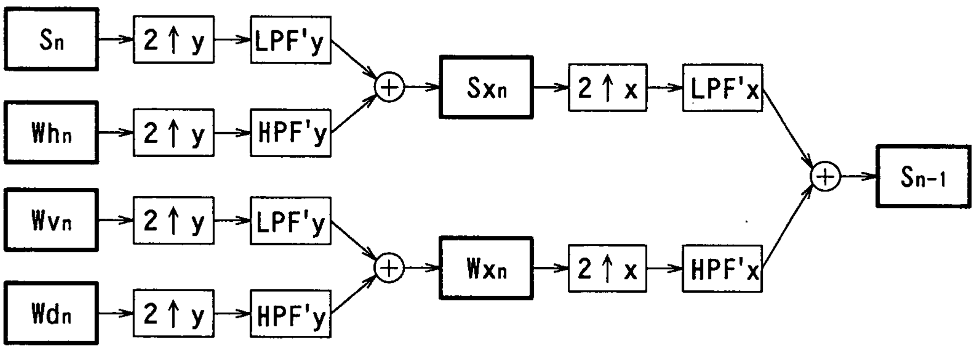


FIG. 7

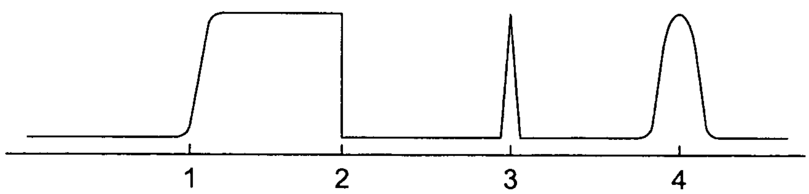


FIG. 8

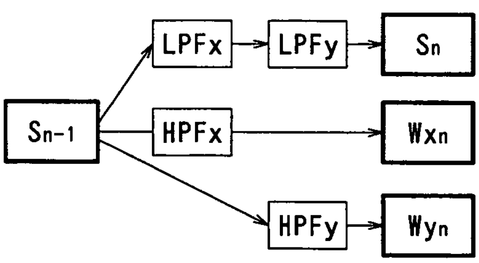

FIG. 9

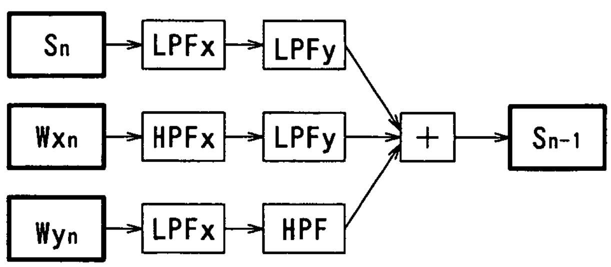

FIG. 10

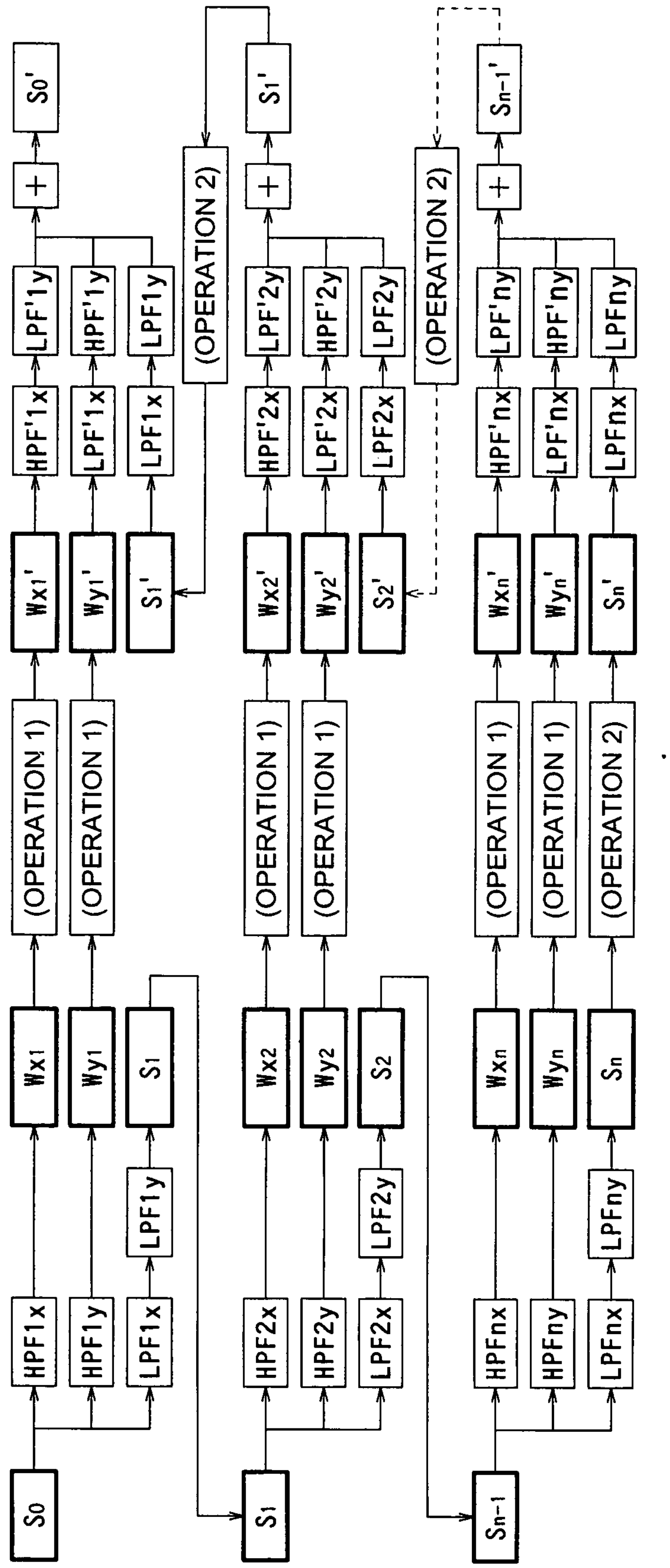
S0
HPF1x
HPF1y
LPF1x
LPF1y
Wx1
Wy1
S1
(OPERATION 1)
(OPERATION 1)
Wx1'
Wy1'
S1'
HPF'1x
LPF'1x
LPF1x
LPF'1y
HPF'1y
LPF1y
+
S0'
(OPERATION 2)
S1
HPF2x
HPF2y
LPF2x
LPF2y
Wx2
Wy2
S2
(OPERATION 1)
(OPERATION 1)
Wx2'
Wy2'
S2'
HPF'2x
LPF'2x
LPF2x
LPF'2y
HPF'2y
LPF2y
+
S1'
(OPERATION 2)
Sn-1
HPFnx
HPFny
LPFnx
LPFny
Wxn
Wyn
Sn
(OPERATION 1)
(OPERATION 1)
(OPERATION 2)
Wxn'
Wyn'
Sn'
HPF'nx
LPF'nx
LPFnx
LPF'ny
HPF'ny
LPFny
+
Sn-1'

FIG. 11

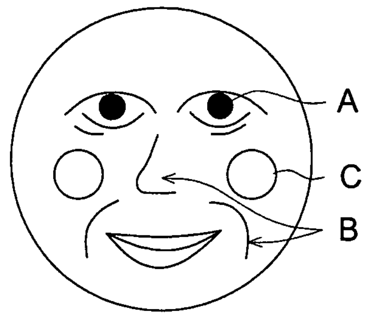
A
C
B

FIG. 12

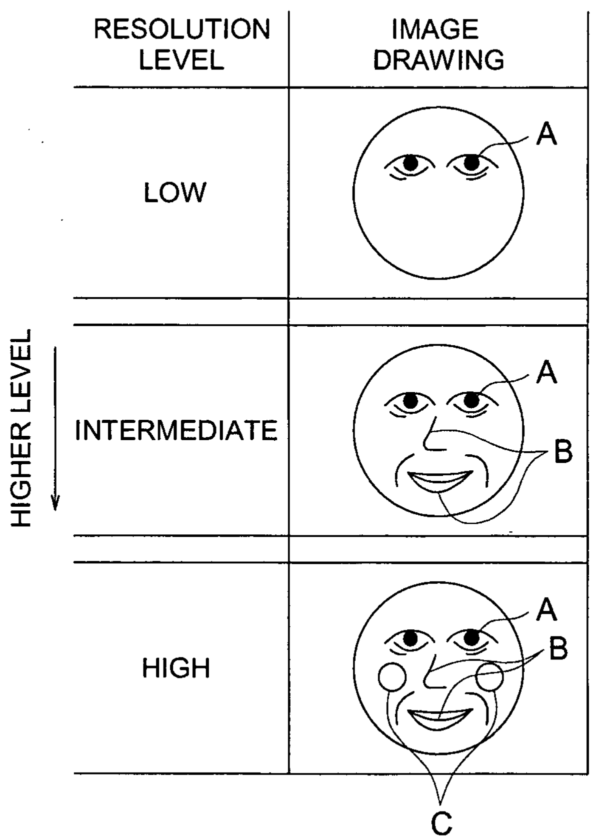
RESOLUTION LEVEL
IMAGE DRAWING
LOW
A
HIGHER LEVEL
INTERMEDIATE
A
B
HIGH
A
B
C

# FIG. 13

| FACE SIZE / RESOLUTION LEVEL | SMALL 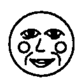 | INTERMEDIATE 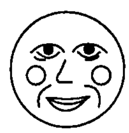 | LARGE 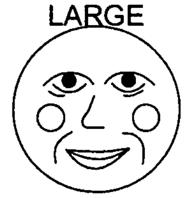 |
|---|---|---|---|
| 1 | A | A | |
| 2 | B C | B | A |
| 3 | | | |
| 4 | | C | B |
| 5 | | | |
| 6 | | | C |

FIG. 14 ( a )

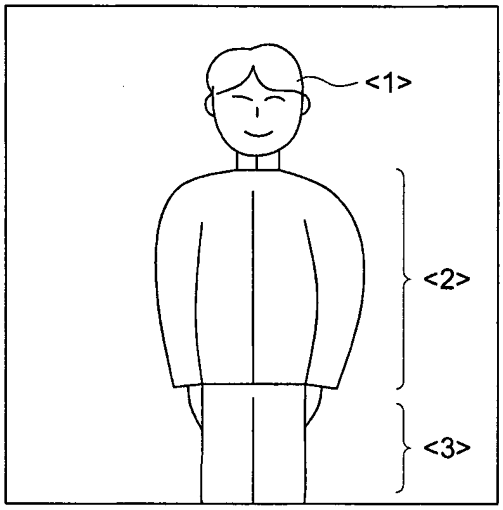


FIG. 14 ( b )

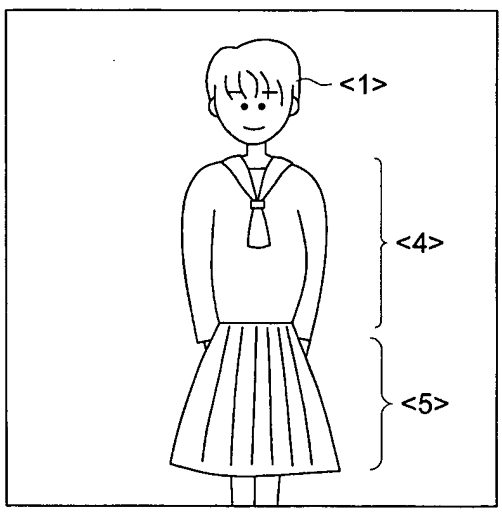

FIG. 15 ( a )

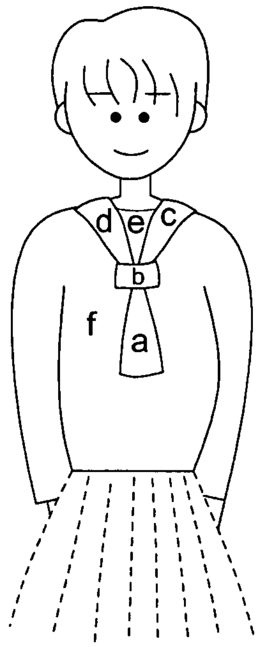


FIG. 15 ( b )

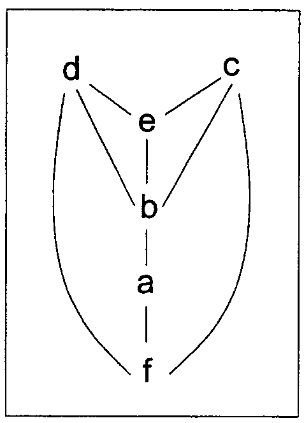

FIG. 16

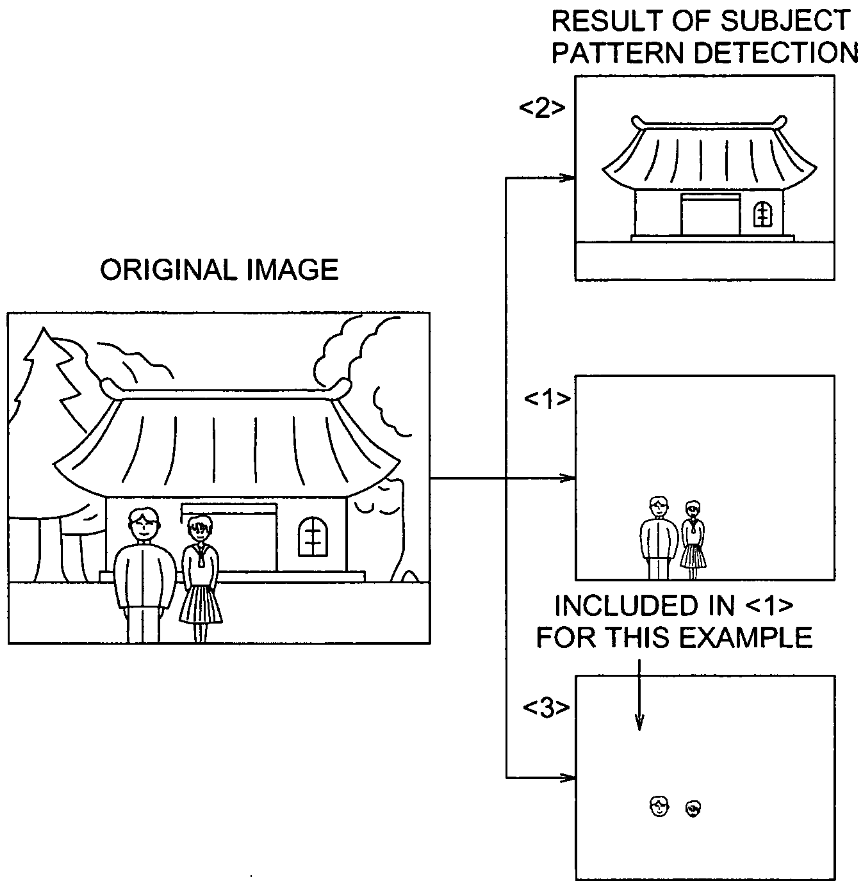
RESULT OF SUBJECT
PATTERN DETECTION
ORIGINAL IMAGE
<2>
<1>
INCLUDED IN <1>
FOR THIS EXAMPLE
<3>

FIG. 17 ( a )

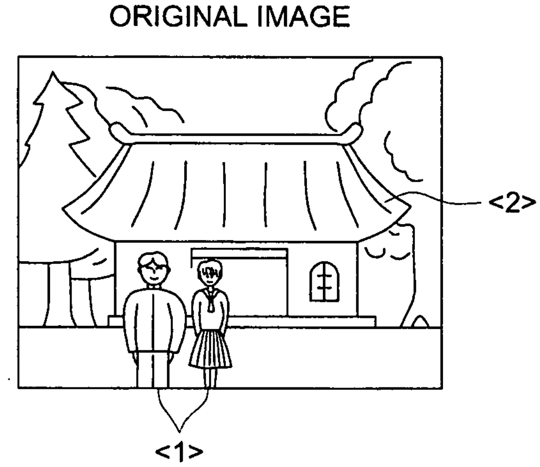


FIG. 17 ( b )

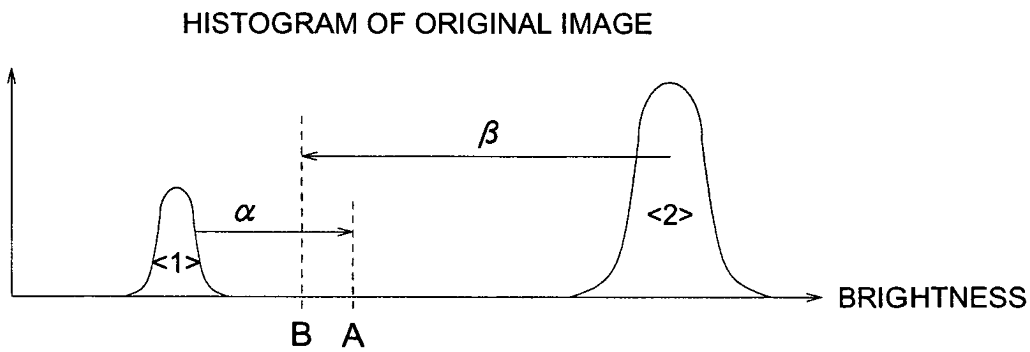


A : BRIGHTNESS SUITED FOR REPRODUCTION OF <1>
B : BRIGHTNESS SUITED FOR REPRODUCTION OF <2>

FIG. 18 ( a )

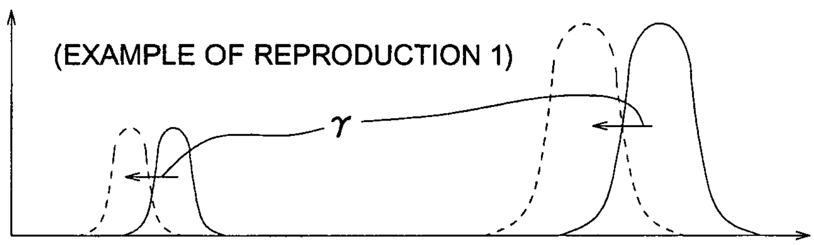


FIG. 18 ( b )

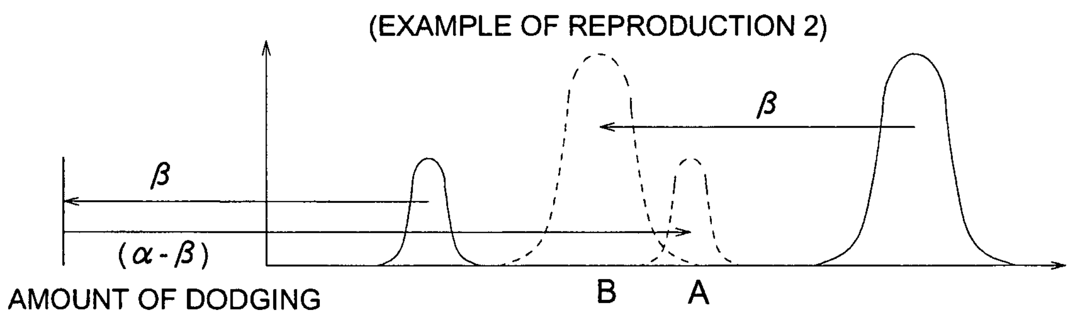


FIG. 18 ( c )

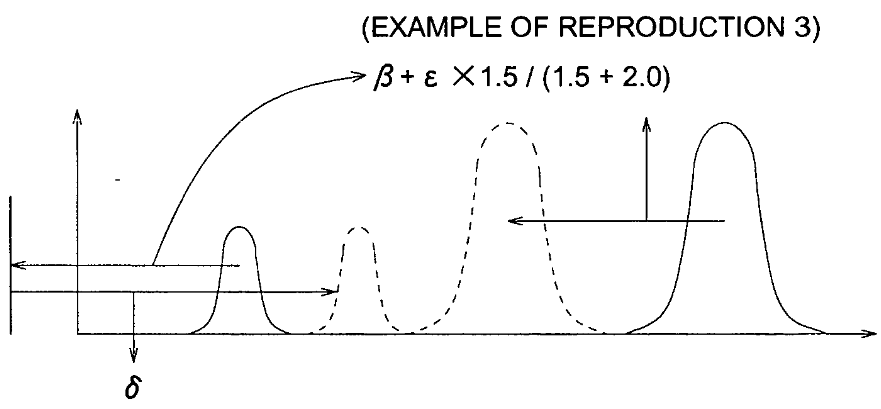

FIG. 19

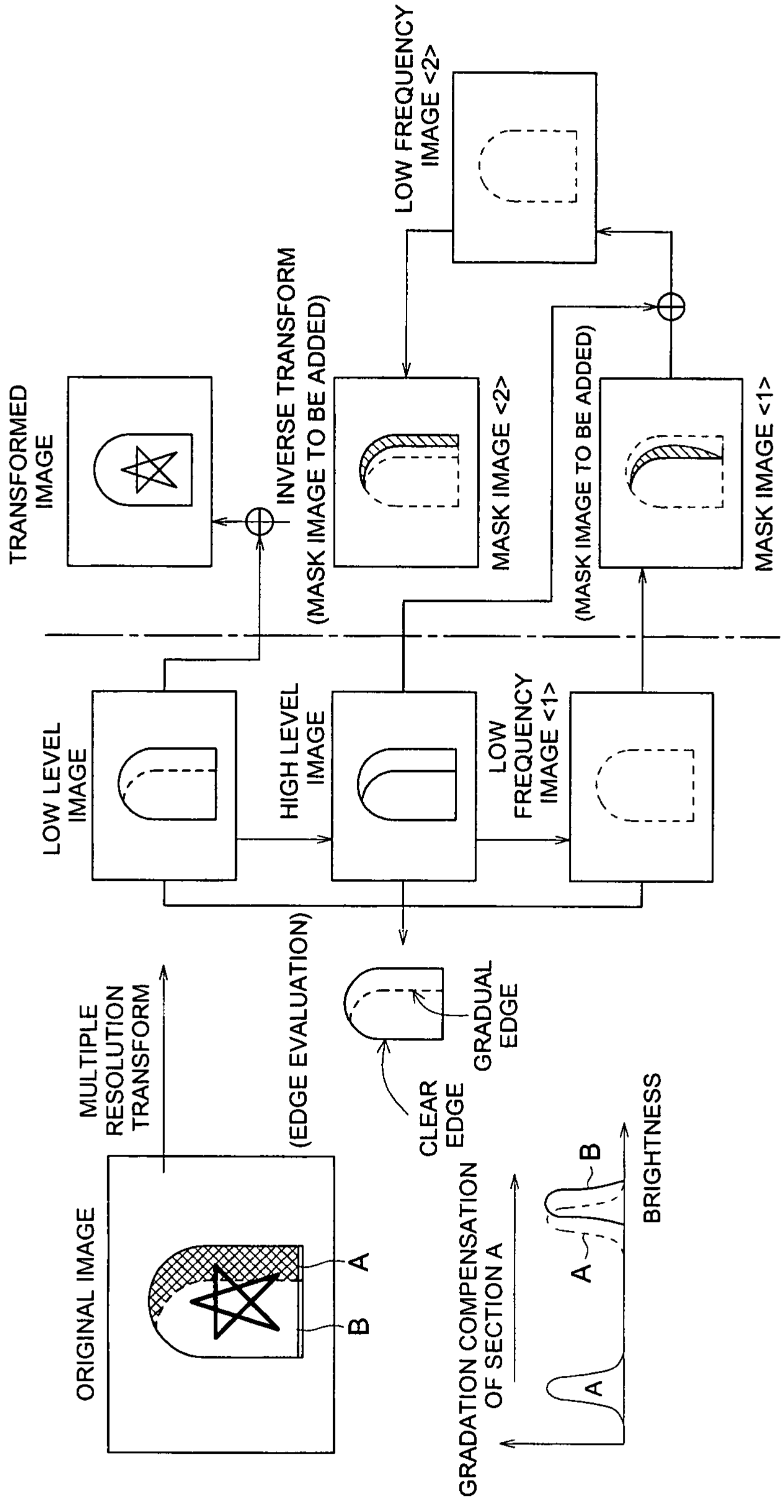
ORIGINAL IMAGE
A
B
MULTIPLE RESOLUTION TRANSFORM
(EDGE EVALUATION)
CLEAR EDGE
GRADUAL EDGE
GRADATION COMPENSATION OF SECTION A
A
A
B
BRIGHTNESS
LOW LEVEL IMAGE
HIGH LEVEL IMAGE
LOW FREQUENCY IMAGE <1>
TRANSFORMED IMAGE
INVERSE TRANSFORM
(MASK IMAGE TO BE ADDED)
MASK IMAGE <2>
(MASK IMAGE TO BE ADDED)
MASK IMAGE <1>
LOW FREQUENCY IMAGE <2>

FIG. 20

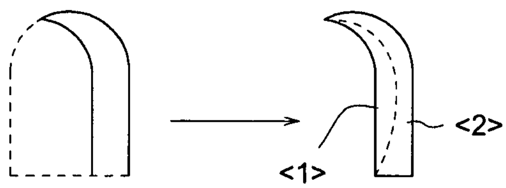


FIG. 21

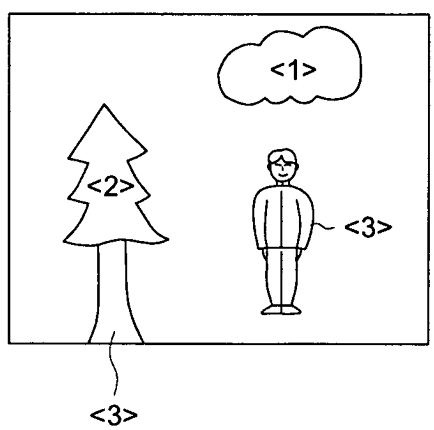

FIG. 22

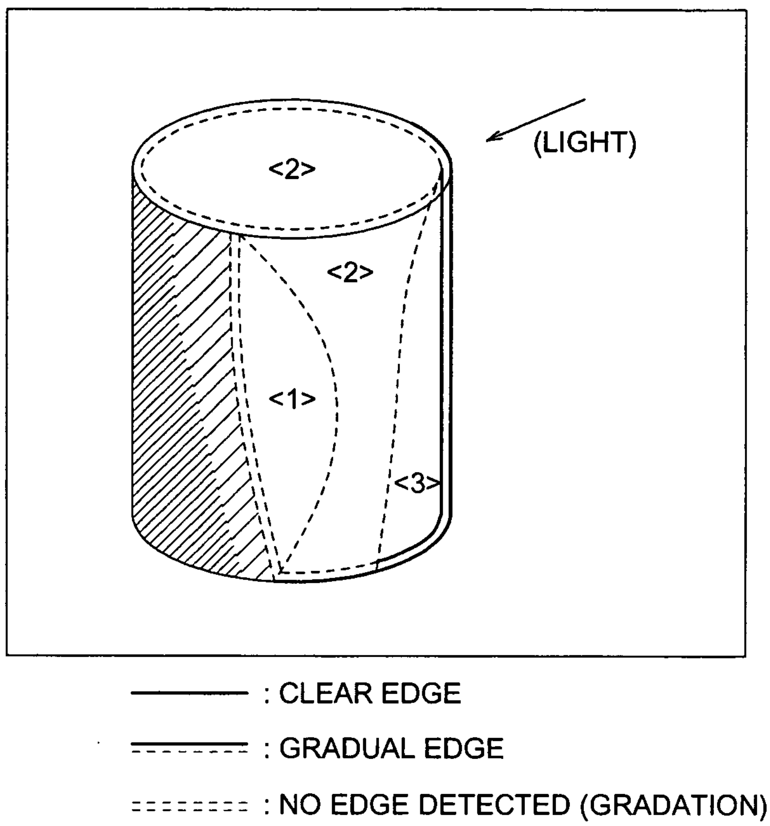
(LIGHT)
<2>
<2>
<1>
<3>
: CLEAR EDGE
: GRADUAL EDGE
: NO EDGE DETECTED (GRADATION)

FIG. 23 (a)

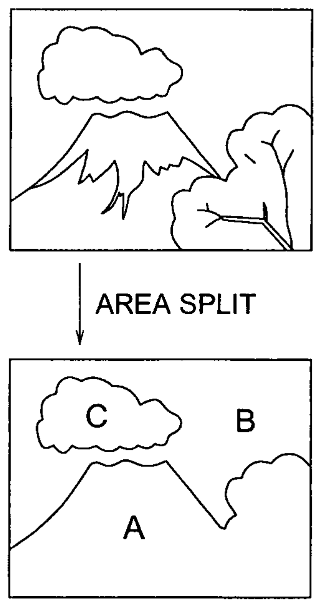


A : MOUNTAIN WITH TREES
B : BLUE SKY
C : CLOUD

FIG. 23 (b)

| | PREFERRED EXAMPLE | | PROPERTIES OF AREA BOUNDARY |
|---|---|---|---|
| | SHARPNESS ENHANCEMENT | REMOVAL OF GRANULAR FORM | |
| A | STRONG | WEAK | CLEAR |
| B | WEAK | STRONG | BLURRED |
| C | INTERMEDIATE | INTERMEDIATE | |

FIG. 24

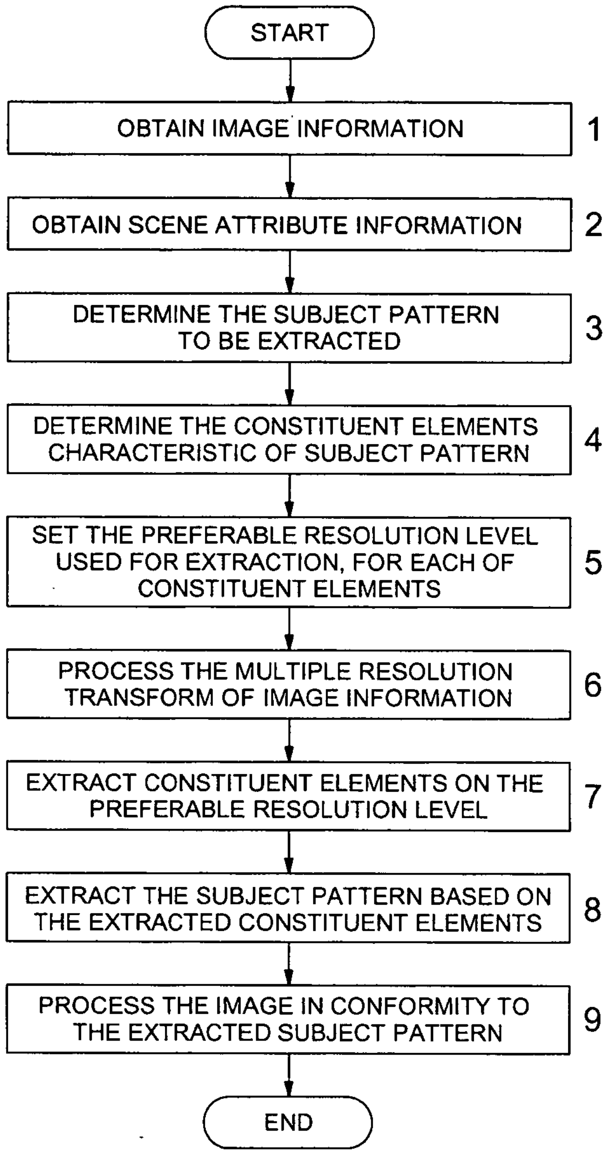
START
OBTAIN IMAGE INFORMATION
1
OBTAIN SCENE ATTRIBUTE INFORMATION
2
DETERMINE THE SUBJECT PATTERN TO BE EXTRACTED
3
DETERMINE THE CONSTITUENT ELEMENTS CHARACTERISTIC OF SUBJECT PATTERN
4
SET THE PREFERABLE RESOLUTION LEVEL USED FOR EXTRACTION, FOR EACH OF CONSTITUENT ELEMENTS
5
PROCESS THE MULTIPLE RESOLUTION TRANSFORM OF IMAGE INFORMATION
6
EXTRACT CONSTITUENT ELEMENTS ON THE PREFERABLE RESOLUTION LEVEL
7
EXTRACT THE SUBJECT PATTERN BASED ON THE EXTRACTED CONSTITUENT ELEMENTS
8
PROCESS THE IMAGE IN CONFORMITY TO THE EXTRACTED SUBJECT PATTERN
9
END

FIG. 25

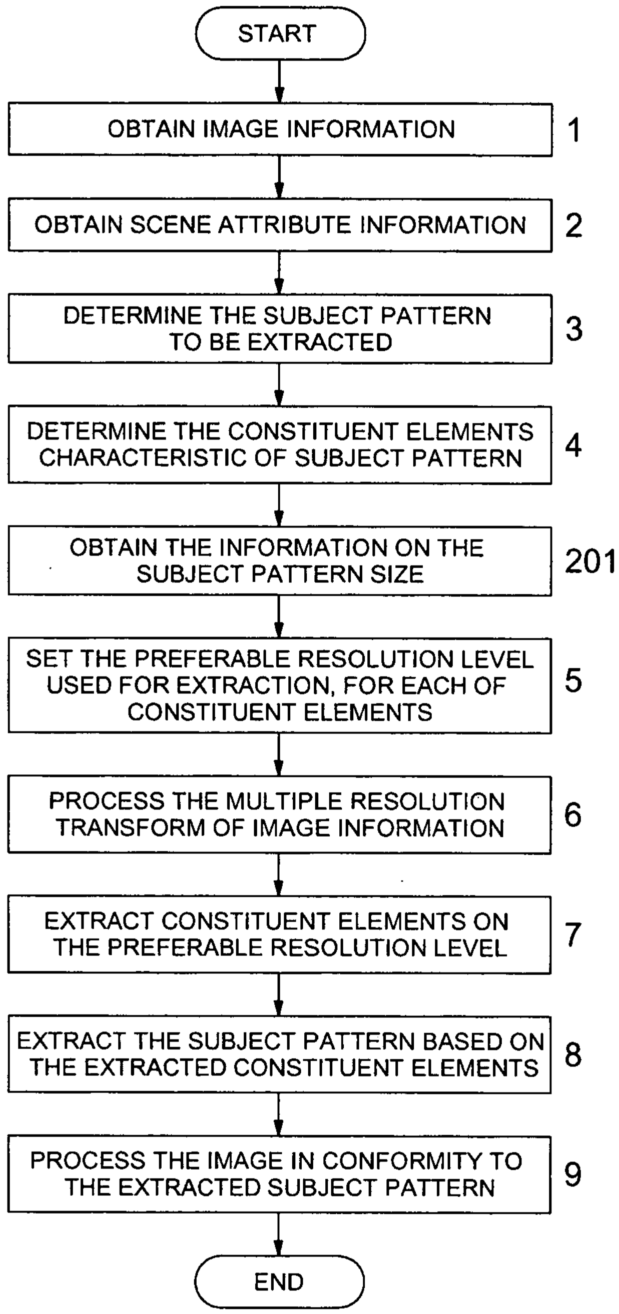
START
OBTAIN IMAGE INFORMATION
1
OBTAIN SCENE ATTRIBUTE INFORMATION
2
DETERMINE THE SUBJECT PATTERN TO BE EXTRACTED
3
DETERMINE THE CONSTITUENT ELEMENTS CHARACTERISTIC OF SUBJECT PATTERN
4
OBTAIN THE INFORMATION ON THE SUBJECT PATTERN SIZE
201
SET THE PREFERABLE RESOLUTION LEVEL USED FOR EXTRACTION, FOR EACH OF CONSTITUENT ELEMENTS
5
PROCESS THE MULTIPLE RESOLUTION TRANSFORM OF IMAGE INFORMATION
6
EXTRACT CONSTITUENT ELEMENTS ON THE PREFERABLE RESOLUTION LEVEL
7
EXTRACT THE SUBJECT PATTERN BASED ON THE EXTRACTED CONSTITUENT ELEMENTS
8
PROCESS THE IMAGE IN CONFORMITY TO THE EXTRACTED SUBJECT PATTERN
9
END

FIG. 26

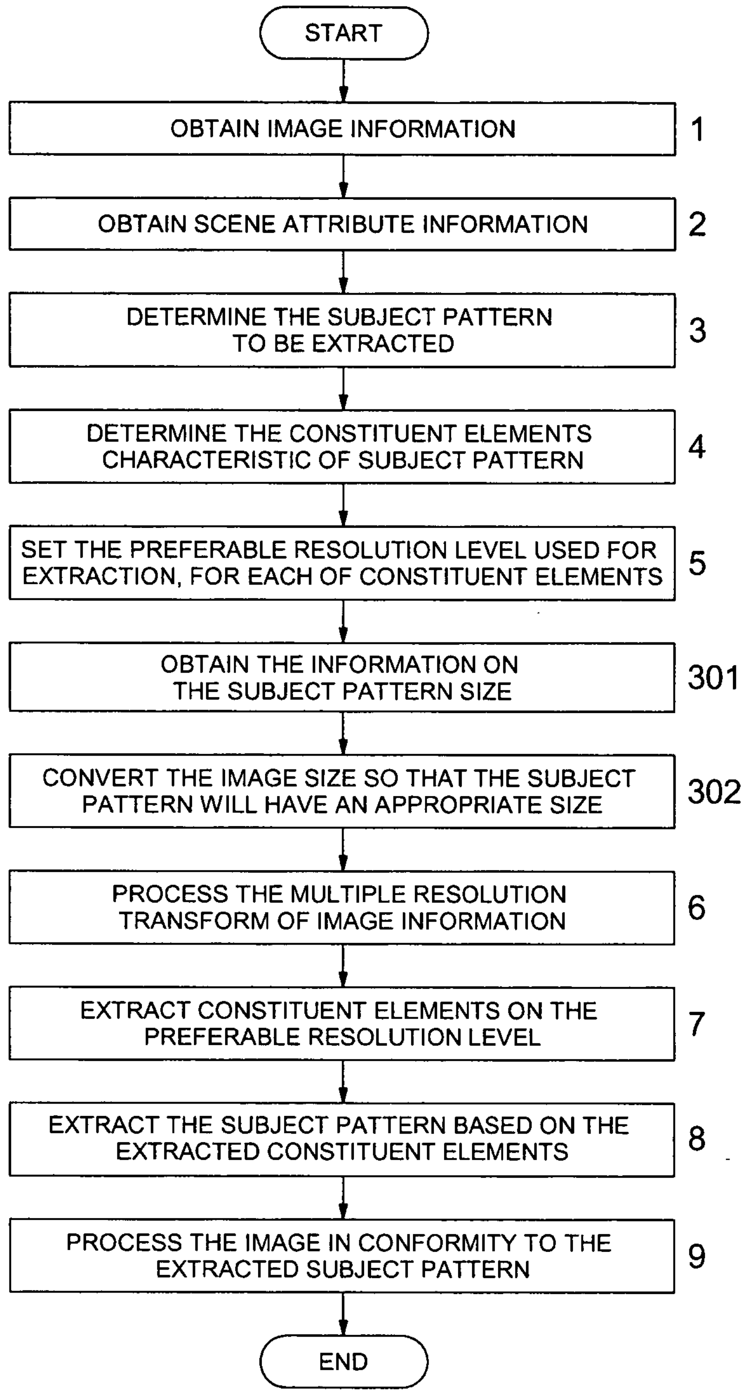
START
OBTAIN IMAGE INFORMATION
1
OBTAIN SCENE ATTRIBUTE INFORMATION
2
DETERMINE THE SUBJECT PATTERN TO BE EXTRACTED
3
DETERMINE THE CONSTITUENT ELEMENTS CHARACTERISTIC OF SUBJECT PATTERN
4
SET THE PREFERABLE RESOLUTION LEVEL USED FOR EXTRACTION, FOR EACH OF CONSTITUENT ELEMENTS
5
OBTAIN THE INFORMATION ON THE SUBJECT PATTERN SIZE
301
CONVERT THE IMAGE SIZE SO THAT THE SUBJECT PATTERN WILL HAVE AN APPROPRIATE SIZE
302
PROCESS THE MULTIPLE RESOLUTION TRANSFORM OF IMAGE INFORMATION
6
EXTRACT CONSTITUENT ELEMENTS ON THE PREFERABLE RESOLUTION LEVEL
7
EXTRACT THE SUBJECT PATTERN BASED ON THE EXTRACTED CONSTITUENT ELEMENTS
8
PROCESS THE IMAGE IN CONFORMITY TO THE EXTRACTED SUBJECT PATTERN
9
END

FIG. 27

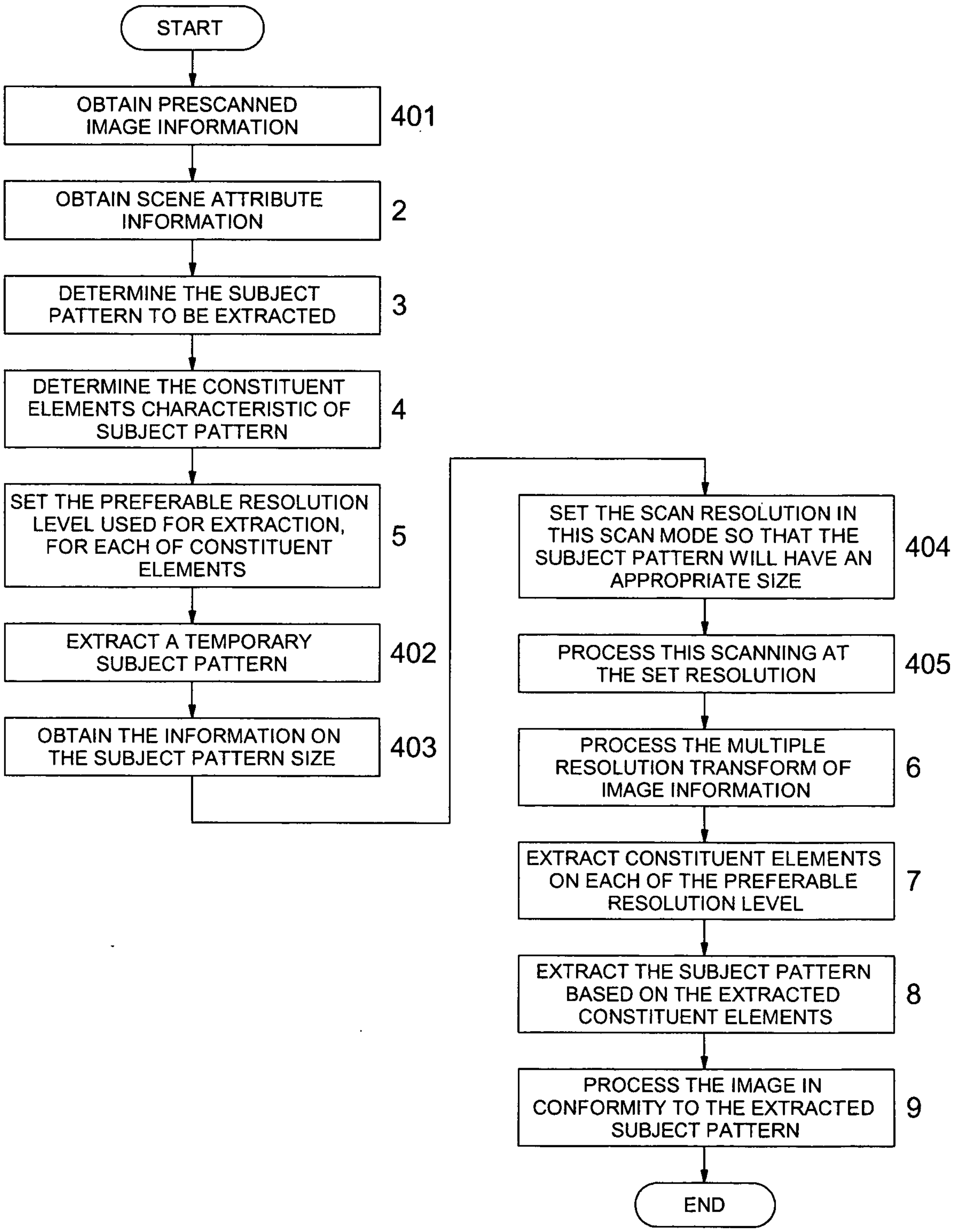
START
OBTAIN PRESCANNED IMAGE INFORMATION
401
OBTAIN SCENE ATTRIBUTE INFORMATION
2
DETERMINE THE SUBJECT PATTERN TO BE EXTRACTED
3
DETERMINE THE CONSTITUENT ELEMENTS CHARACTERISTIC OF SUBJECT PATTERN
4
SET THE PREFERABLE RESOLUTION LEVEL USED FOR EXTRACTION, FOR EACH OF CONSTITUENT ELEMENTS
5
EXTRACT A TEMPORARY SUBJECT PATTERN
402
OBTAIN THE INFORMATION ON THE SUBJECT PATTERN SIZE
403
SET THE SCAN RESOLUTION IN THIS SCAN MODE SO THAT THE SUBJECT PATTERN WILL HAVE AN APPROPRIATE SIZE
404
PROCESS THIS SCANNING AT THE SET RESOLUTION
405
PROCESS THE MULTIPLE RESOLUTION TRANSFORM OF IMAGE INFORMATION
6
EXTRACT CONSTITUENT ELEMENTS ON EACH OF THE PREFERABLE RESOLUTION LEVEL
7
EXTRACT THE SUBJECT PATTERN BASED ON THE EXTRACTED CONSTITUENT ELEMENTS
8
PROCESS THE IMAGE IN CONFORMITY TO THE EXTRACTED SUBJECT PATTERN
9
END

FIG. 28

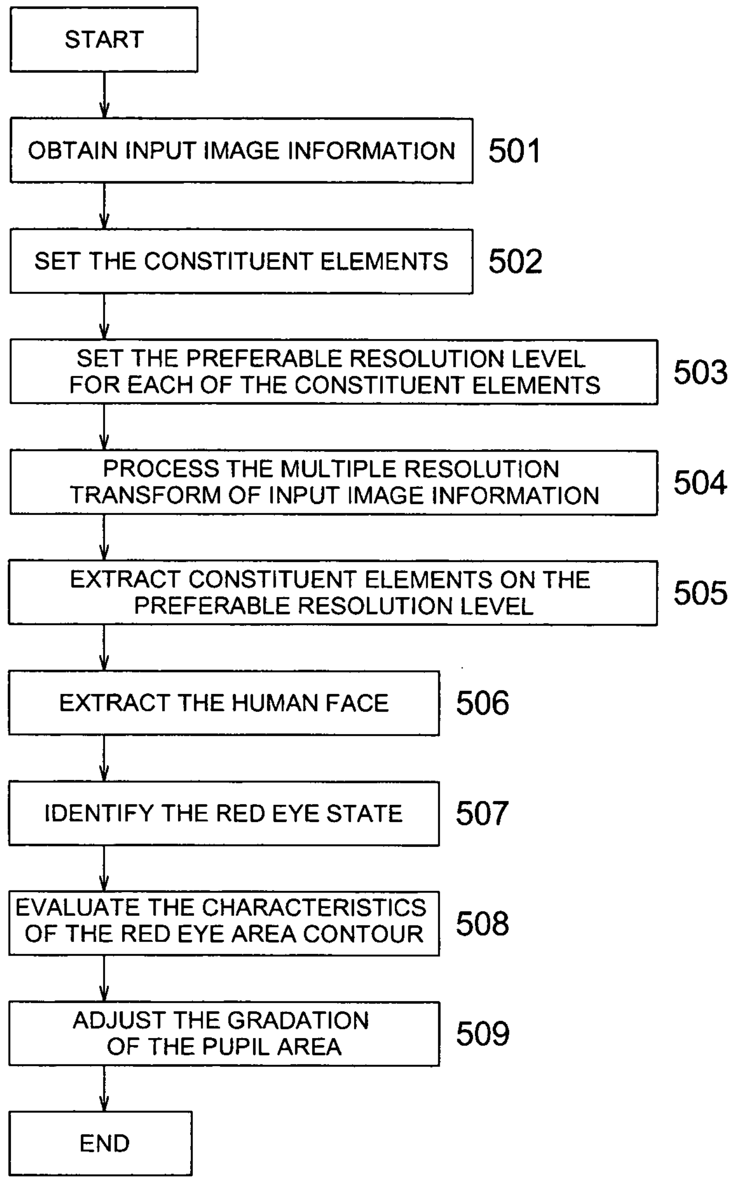
START
OBTAIN INPUT IMAGE INFORMATION
501
SET THE CONSTITUENT ELEMENTS
502
SET THE PREFERABLE RESOLUTION LEVEL FOR EACH OF THE CONSTITUENT ELEMENTS
503
PROCESS THE MULTIPLE RESOLUTION TRANSFORM OF INPUT IMAGE INFORMATION
504
EXTRACT CONSTITUENT ELEMENTS ON THE PREFERABLE RESOLUTION LEVEL
505
EXTRACT THE HUMAN FACE
506
IDENTIFY THE RED EYE STATE
507
EVALUATE THE CHARACTERISTICS OF THE RED EYE AREA CONTOUR
508
ADJUST THE GRADATION OF THE PUPIL AREA
509
END

FIG. 29

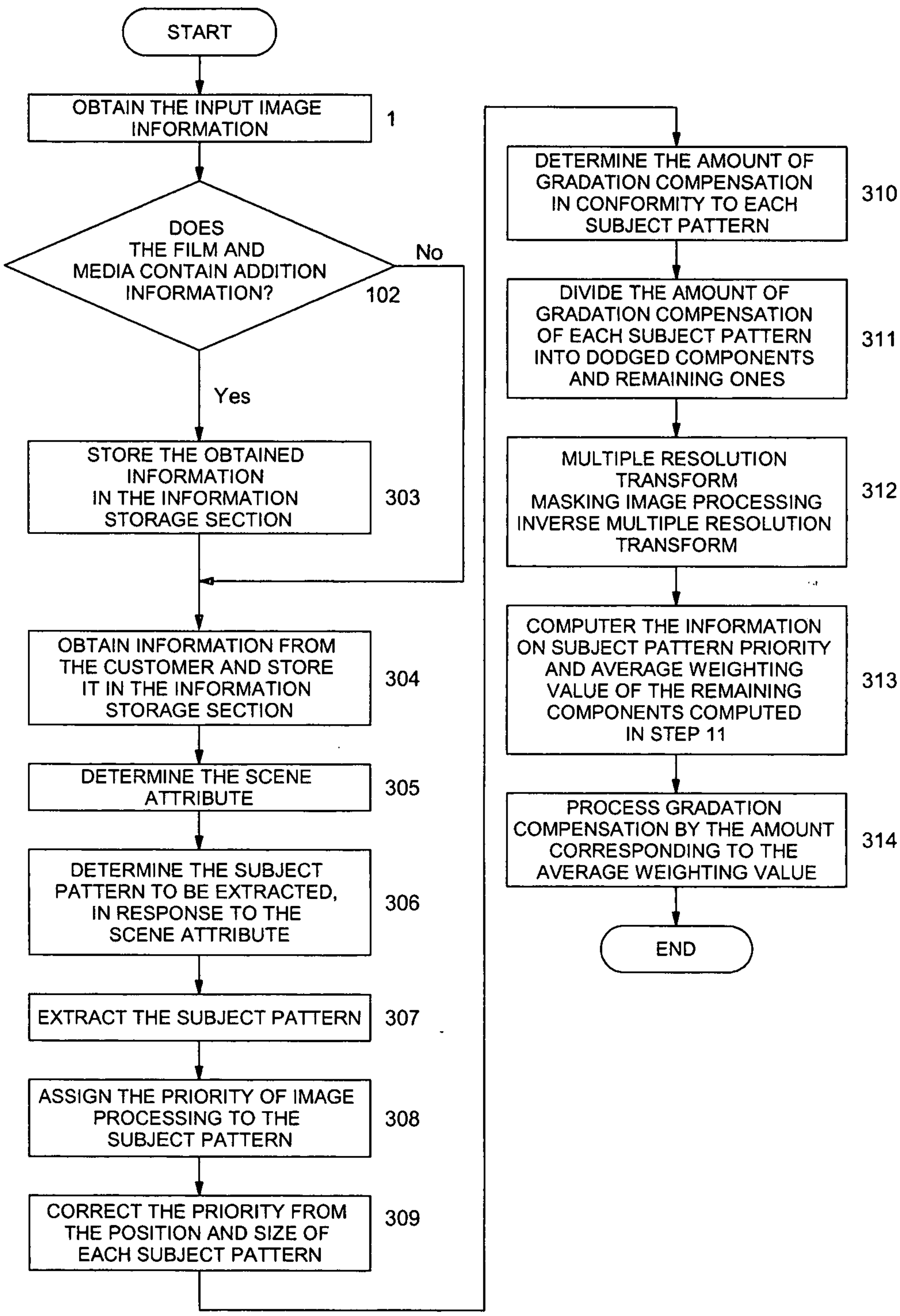
START
OBTAIN THE INPUT IMAGE INFORMATION
1
DOES THE FILM AND MEDIA CONTAIN ADDITION INFORMATION?
102
No
Yes
STORE THE OBTAINED INFORMATION IN THE INFORMATION STORAGE SECTION
303
OBTAIN INFORMATION FROM THE CUSTOMER AND STORE IT IN THE INFORMATION STORAGE SECTION
304
DETERMINE THE SCENE ATTRIBUTE
305
DETERMINE THE SUBJECT PATTERN TO BE EXTRACTED, IN RESPONSE TO THE SCENE ATTRIBUTE
306
EXTRACT THE SUBJECT PATTERN
307
ASSIGN THE PRIORITY OF IMAGE PROCESSING TO THE SUBJECT PATTERN
308
CORRECT THE PRIORITY FROM THE POSITION AND SIZE OF EACH SUBJECT PATTERN
309
DETERMINE THE AMOUNT OF GRADATION COMPENSATION IN CONFORMITY TO EACH SUBJECT PATTERN
310
DIVIDE THE AMOUNT OF GRADATION COMPENSATION OF EACH SUBJECT PATTERN INTO DODGED COMPONENTS AND REMAINING ONES
311
MULTIPLE RESOLUTION TRANSFORM
MASKING IMAGE PROCESSING
INVERSE MULTIPLE RESOLUTION TRANSFORM
312
COMPUTER THE INFORMATION ON SUBJECT PATTERN PRIORITY AND AVERAGE WEIGHTING VALUE OF THE REMAINING COMPONENTS COMPUTED IN STEP 11
313
PROCESS GRADATION COMPENSATION BY THE AMOUNT CORRESPONDING TO THE AVERAGE WEIGHTING VALUE
314
END

FIG. 30

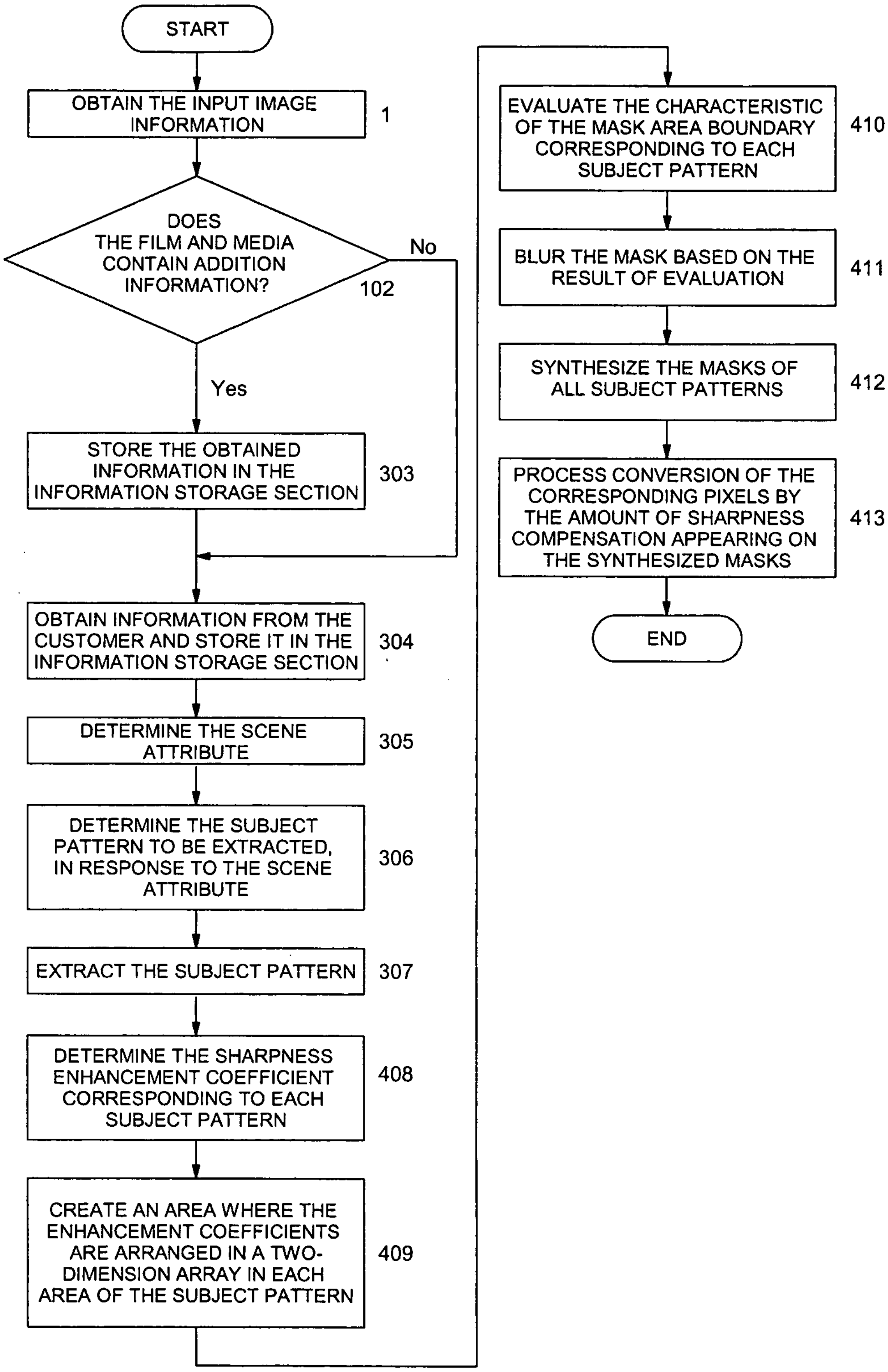
START
OBTAIN THE INPUT IMAGE INFORMATION
1
DOES THE FILM AND MEDIA CONTAIN ADDITION INFORMATION?
102
No
Yes
STORE THE OBTAINED INFORMATION IN THE INFORMATION STORAGE SECTION
303
OBTAIN INFORMATION FROM THE CUSTOMER AND STORE IT IN THE INFORMATION STORAGE SECTION
304
DETERMINE THE SCENE ATTRIBUTE
305
DETERMINE THE SUBJECT PATTERN TO BE EXTRACTED, IN RESPONSE TO THE SCENE ATTRIBUTE
306
EXTRACT THE SUBJECT PATTERN
307
DETERMINE THE SHARPNESS ENHANCEMENT COEFFICIENT CORRESPONDING TO EACH SUBJECT PATTERN
408
CREATE AN AREA WHERE THE ENHANCEMENT COEFFICIENTS ARE ARRANGED IN A TWO-DIMENSION ARRAY IN EACH AREA OF THE SUBJECT PATTERN
409
EVALUATE THE CHARACTERISTIC OF THE MASK AREA BOUNDARY CORRESPONDING TO EACH SUBJECT PATTERN
410
BLUR THE MASK BASED ON THE RESULT OF EVALUATION
411
SYNTHESIZE THE MASKS OF ALL SUBJECT PATTERNS
412
PROCESS CONVERSION OF THE CORRESPONDING PIXELS BY THE AMOUNT OF SHARPNESS COMPENSATION APPEARING ON THE SYNTHESIZED MASKS
413
END